# EUROPEAN PATENT APPLICATION

(11) **EP 4 478 216 A1**
(43) Date of publication of application: **18.12.2024**
(21) Application number: 23305953.4
(22) Date of filing: 15.06.2023
(51) Int. Cl.: G06F 16/907

(54) **DEVICE, SYSTEM AND METHOD FOR DATA LINEAGE TRACKING, REPORTING AND DATABASE UPDATING**

(71) Applicant: Amadeus S.A.S., 06410 Biot (FR)
(72) Inventor: DEMAZEAU, Michel, 06200 Nice (FR); DRIENCOURT, Loic, 06740 Chateauneuf (FR); PERRET, Jean-Philippe, 83440 Callian (FR); RADIGOIS, Emeline, 06560 Valbonne (FR)
(74) Representative: Samson & Partner Patentanwälte mbB

(57) **Abstract**

A device, system and method for data lineage tracking, reporting and database updating is provided. A first device alters metadata of data to include an identifier. A second device receives the data and implements a data pipeline to process the data to generate altered data that includes the identifier in respective metadata. A metadata identifier engine of the second device processes the altered data to identify the identifier in the respective metadata, and provides a usage indication (including the identifier) of the data to the first device. The first device stores the indication as a data lineage data, processes the data lineage data to determine usage of the data by the second device, and provides information indicative of the usage of the data by the second device over a computer network such that users of the computer network have immediate access to up-to-date data lineage data associated with the data.

## Description

### FIELD

The specification relates generally to data lineage and databases, and, in particular, to a device, system and method for data lineage tracking, reporting and database updating.

### BACKGROUND

Data lineage tracking can be challenging and furthermore poor determination of data lineage may waste bandwidth and/or processing resources in systems which process data. For example, huge amounts of data are exchanged daily in communication networks, for example in subscriber business-to-business (B2B) models, and when data is no longer used, but still exchanged, bandwidth may be wasted and furthermore, such data may still be processed when received. Furthermore, maintaining such data in databases may be a waste of storage.

### SUMMARY

A first aspect of the present specification provides a system comprising: a first database storing given data; a data lineage database storing data lineage data; a first computing device configured to: alter metadata of the given data to include a given identifier; a second computing device configured to: receive the given data that includes the given identifier in the metadata; implement a data pipeline that processes the given data to generate altered given data that includes the given identifier in respective metadata; and implement a metadata identifier engine configured to: process the altered given data to identify the given identifier in the respective metadata; and provide an indication of usage of the given data to the first computing device, the indication including the given identifier; wherein the first computing device is further configured to: store the indication, or data thereof, at the data lineage database in the data lineage data; process the data lineage data, as stored at the data lineage database to determine usage of the given data by the second computing device; and provide information indicative of the usage of the given data by the second computing device over a computer network such that users of the computer network have immediate access to up-to-date data lineage data associated with the given data.

The system of the first aspect may further comprise a second database, wherein the second computing device may be further configured to store the altered given data at the second database.

At the system of the first aspect, the second computing device may be further configured to: implement a scan data pipeline that performs a scan of one or more of the given data and the altered given data; and implement an identifier engine configured to: identify one or more of the given data and the altered given data in the scan data pipeline using the given identifier; and provide an alert of the scan associated with the given data to the first computing device, the alert including the given identifier; wherein the first computing device may be further configured to: store the alert, or respective data thereof, at the data lineage database in the data lineage data; process the alert, or the respective data thereof, as stored at the data lineage database to determine that the scan occurred, in association with the given data, by the second computing device; and provide respective information indicative of the scan associated with the given data, as implemented by the second computing device, over the computer network such that the users of the computer network have immediate access to the up-to-date data lineage data of the given data that includes the respective information. In such examples, the first computing device may be further configured to store the alert, or the respective data thereof, at the data lineage database in the data lineage data only when other data that includes the respective data provided by the alert is not already stored at the data lineage database.

The system of the first aspect, may further comprise: a third computing device incompatible with processing the metadata or the respective metadata, wherein the first computing device may be further configured to: replace an initial value of a field of the given data at the first database with a dummy value that is incompatible with a given data format associated with the field; wherein the third computing device may be configured to: receive the given data that includes the dummy value; implement a respective data pipeline that processes the given data; determine a failure of the respective data pipeline to process the given data due to the dummy value being incompatible with the given data format; and implement a dummy value identifier engine that may be configured to: process the given data that includes the dummy value to identify the dummy value; provide a respective indication of usage of the given data to the first computing device, the respective indication including the given identifier; wherein the first computing device may be further configured to: store the respective indication, or respective data thereof, at the data lineage database in the data lineage data; process the respective indication, or the respective data thereof, as stored at the data lineage database to determine respective usage of the given data by the third computing device; and provide respective information indicative of the respective usage of the given data by the third computing device over the computer network such that the users of the computer network have immediate access to the up-to-date data lineage data of the given data that includes the respective information. In these examples, the system of the first aspect, may further comprise a third database, wherein the third computing device may be further configured to: store the given data that includes the dummy value at the third database; and process the given data that includes the dummy value at the third database to identify the dummy value.

In some examples, at the system of the first aspect, the third computing device may be further configured to: provide a failure indication to the first computing device; wherein the first computing device may be further configured to: receive the failure indication from the third computing device; and repair the given data at the first database to replace the dummy value at the field with the initial value, and wherein the third computing device may be yet further configured to: again implement the respective data pipeline to process the given data as repaired.

In some examples, at the system of the first aspect, the given data as received at the third computing device may be in a form of the altered given data and may be received from the second computing device as output from the data pipeline.

At the system of the first aspect, the data pipeline may be a component of a local data environment that is local to the first database.

At the system of the first aspect, the data pipeline may be a component of a remote data environment that may be remote from the first database.

At the system of the first aspect, the information indicative of the usage of the given data by the second computing device may identify one or more of: the given data; the second computing device; a user associated with the second computing device; an entity associated with the second computing device; and a process implemented by the data pipeline.

A third aspect of the present specification provides a non-transitory computer-readable medium storing a computer program, wherein execution of the computer program is to implement a method comprising: altering, via a first computing device, metadata of given data to include a given identifier, the given data stored at a first database; receiving, via a second computing device, the given data that includes the given identifier in the metadata; implementing, via the second computing device, a data pipeline that processes the given data to generate altered given data that includes the given identifier in respective metadata; and implementing, via the second computing device, a metadata identifier engine; processing, via the metadata identifier engine, the altered given data to identify the given identifier in the respective metadata; providing, via the metadata identifier engine, an indication of usage of the given data to the first computing device, the indication including the given identifier; storing, via the first computing device, the indication, or data thereof, at a data lineage database in data lineage data; processing, via the first computing device, the data lineage data, as stored at the data lineage database to determine usage of the given data by the second computing device; and providing, via the first computing device, information indicative of the usage of the given data by the second computing device over a computer network such that users of the computer network have immediate access to up-to-date data lineage data associated with the given data.

The method of the third aspect may further comprise: storing, via the second computing device, the altered given data at a second database.

The method of the third aspect may further comprise: implementing, via the second computing device, a scan data pipeline that performs a scan of one or more of the given data and the altered given data; implementing, via the second computing device, an identifier engine; identifying, via the identifier engine, one or more of the given data and the altered given data in the scan data pipeline using the given identifier; providing, via the identifier engine, an alert of the scan associated with the given data to the first computing device, the alert including the given identifier; storing, via the first computing device, the alert, or respective data thereof, at the data lineage database in the data lineage data; processing, via the first computing device, the alert, or the respective data thereof, as stored at the data lineage database to determine that the scan occurred, in association with the given data, by the second computing device; and providing, via the first computing device, respective information indicative of the scan associated with the given data, as implemented by the second computing device, over the computer network such that the users of the computer network have immediate access to the up-to-date data lineage data of the given data that includes the respective information.

The method of the third aspect may further comprise: storing, via the first computing device, the alert, or the respective data thereof, at the data lineage database in the data lineage data only when other data that includes the respective data provided by the alert is not already stored at the data lineage database.

The method of the third aspect may further comprise, may further comprise: replacing, via the first computing device, an initial value of a field of the given data at the first database with a dummy value that is incompatible with a given data format associated with the field; receiving, via a third computing device, the given data that includes the dummy value, the third computing device incompatible with processing the metadata or the respective metadata; implementing, via the third computing device, a respective data pipeline that processes the given data; determining, via the third computing device, a failure of the respective data pipeline to process the given data due to the dummy value being incompatible with the given data format; implementing, via the third computing device, a dummy value identifier engine; processing, via the dummy value identifier engine, the given data that includes the dummy value to identify the dummy value; providing via the dummy value identifier engine, a respective indication of usage of the given data to the first computing device, the respective indication including the given identifier; storing, via the first computing device, the respective indication, or respective data thereof, at the data lineage database in the data lineage data; processing, via the first computing device, the respective indication, or the respective data thereof, as stored at the data lineage database to determine respective usage of the given data by the third computing device; and providing, via the first computing device, respective information indicative of the respective usage of the given data by the third computing device over the computer network such that the users of the computer network have immediate access to the up-to-date data lineage data of the given data that includes the respective information.

The method of the third aspect may further comprise: storing, via the third computing device, the given data that includes the dummy value at a third database; and processing, via the first computing device, the given data that includes the dummy value at the third database to identify the dummy value.

The method of the third aspect may further comprise: providing, via the third computing device, a failure indication to the first computing device; receiving, via the first computing device, the failure indication from the third computing device; repairing, via the first computing device, the given data at the first database to replace the dummy value at the field with the initial value, and again implementing, via the third computing device, the respective data pipeline to process the given data as repaired.

At the method of the third aspect, the given data as received at the third computing device may be in a form of the altered given data and may be received from the second computing device as output from the data pipeline.

At the method of the third aspect, the data pipeline may be a component of a local data environment that is local to the first database.

At the method of the third aspect, the data pipeline may be a component of a remote data environment that is remote from the first database.

At the method of the third aspect, the information indicative of the usage of the given data by the second computing device may identifies one or more of: the given data; the second computing device; a user associated with the second computing device; an entity associated with the second computing device; and a process implemented by the data pipeline.

A third aspect of the present specification provides a method comprising: altering, via a first computing device, metadata of given data to include a given identifier, the given data stored at a first database; receiving, via a second computing device, the given data that includes the given identifier in the metadata; implementing, via the second computing device, a data pipeline that processes the given data to generate altered given data that includes the given identifier in respective metadata; and implementing, via the second computing device, a metadata identifier engine; processing, via the metadata identifier engine, the altered given data to identify the given identifier in the respective metadata; providing, via the metadata identifier engine, an indication of usage of the given data to the first computing device, the indication including the given identifier; storing, via the first computing device, the indication, or data thereof, at a data lineage database in data lineage data; processing, via the first computing device, the data lineage data, as stored at the data lineage database to determine usage of the given data by the second computing device; and providing, via the first computing device, information indicative of the usage of the given data by the second computing device over a computer network such that users of the computer network have immediate access to up-to-date data lineage data associated with the given data.

The method of the third aspect may further comprise: storing, via the second computing device, the altered given data at a second database.

The method of the third aspect may further comprise: implementing, via the second computing device, a scan data pipeline that performs a scan of one or more of the given data and the altered given data; implementing, via the second computing device, an identifier engine; identifying, via the identifier engine, one or more of the given data and the altered given data in the scan data pipeline using the given identifier; providing, via the identifier engine, an alert of the scan associated with the given data to the first computing device, the alert including the given identifier; storing, via the first computing device, the alert, or respective data thereof, at the data lineage database in the data lineage data; processing, via the first computing device, the alert, or the respective data thereof, as stored at the data lineage database to determine that the scan occurred, in association with the given data, by the second computing device; and providing, via the first computing device, respective information indicative of the scan associated with the given data, as implemented by the second computing device, over the computer network such that the users of the computer network have immediate access to the up-to-date data lineage data of the given data that includes the respective information.

The method of the third aspect may further comprise: storing, via the first computing device, the alert, or the respective data thereof, at the data lineage database in the data lineage data only when other data that includes the respective data provided by the alert is not already stored at the data lineage database.

The method of the third aspect may further comprise, may further comprise: replacing, via the first computing device, an initial value of a field of the given data at the first database with a dummy value that is incompatible with a given data format associated with the field; receiving, via a third computing device, the given data that includes the dummy value, the third computing device incompatible with processing the metadata or the respective metadata; implementing, via the third computing device, a respective data pipeline that processes the given data; determining, via the third computing device, a failure of the respective data pipeline to process the given data due to the dummy value being incompatible with the given data format; implementing, via the third computing device, a dummy value identifier engine; processing, via the dummy value identifier engine, the given data that includes the dummy value to identify the dummy value; providing via the dummy value identifier engine, a respective indication of usage of the given data to the first computing device, the respective indication including the given identifier; storing, via the first computing device, the respective indication, or respective data thereof, at the data lineage database in the data lineage data; processing, via the first computing device, the respective indication, or the respective data thereof, as stored at the data lineage database to determine respective usage of the given data by the third computing device; and providing, via the first computing device, respective information indicative of the respective usage of the given data by the third computing device over the computer network such that the users of the computer network have immediate access to the up-to-date data lineage data of the given data that includes the respective information.

The method of the third aspect may further comprise: storing, via the third computing device, the given data that includes the dummy value at a third database; and processing, via the first computing device, the given data that includes the dummy value at the third database to identify the dummy value.

The method of the third aspect may further comprise: providing, via the third computing device, a failure indication to the first computing device; receiving, via the first computing device, the failure indication from the third computing device; repairing, via the first computing device, the given data at the first database to replace the dummy value at the field with the initial value, and again implementing, via the third computing device, the respective data pipeline to process the given data as repaired.

At the method of the third aspect, the given data as received at the third computing device may be in a form of the altered given data and may be received from the second computing device as output from the data pipeline.

At the method of the third aspect, the data pipeline may be a component of a local data environment that is local to the first database.

At the method of the third aspect, the data pipeline may be a component of a remote data environment that is remote from the first database.

At the method of the third aspect, the information indicative of the usage of the given data by the second computing device may identifies one or more of: the given data; the second computing device; a user associated with the second computing device; an entity associated with the second computing device; and a process implemented by the data pipeline.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for data lineage tracking, reporting and database updating, according to non-limiting examples.
FIG. 2 depicts a device for data lineage tracking, reporting and database updating, according to non-limiting examples.
FIG. 3 depicts a flowchart of a method for data lineage tracking, reporting and database updating, according to non-limiting examples.
FIG. 4 depicts the system of FIG. 1 implementing aspects of a method for data lineage tracking, reporting and database updating, according to non-limiting examples.
FIG. 5 depicts the system of FIG. 1 implementing further aspects of a method for data lineage tracking, reporting and database updating, according to non-limiting examples.
FIG. 6 depicts the system of FIG. 1 implementing yet further aspects of a method for data lineage tracking, reporting and database updating, according to non-limiting examples.
FIG. 7 depicts a flowchart of a further method for data lineage tracking, reporting and database updating, according to non-limiting examples.
FIG. 8 depicts the system of FIG. 1 implementing aspects of a further method for data lineage tracking, reporting and database updating, according to non-limiting examples.
FIG. 9 depicts a flowchart of yet a further method for data lineage tracking, reporting and database updating, according to non-limiting examples.
FIG. 10 depicts the system of FIG. 1 implementing aspects of yet a further method for data lineage tracking, reporting and database updating, according to non-limiting examples.
FIG. 11 depicts the system of FIG. 1 implementing further aspects of yet a further method for data lineage tracking, reporting and database updating, according to non-limiting examples.
FIG. 12 depicts the system of FIG. 1 implementing yet further aspects of yet a further method for data lineage tracking, reporting and database updating, according to non-limiting examples.

### DETAILED DESCRIPTION

Data lineage tracking can be challenging and furthermore poor determination of data lineage may waste bandwidth and/or processing resources in systems which process data. For example, huge amounts of data are exchanged daily in communication networks, for example in subscriber business-to-business (B2B) models, and when data is no longer used, but still exchanged, bandwidth may be wasted and furthermore, such data may still be processed when received, wasting processing resources. Furthermore, maintaining such data in databases may be a waste of storage. Furthermore, it can be challenging to enforce regulations on data with large scale data exchanges (e.g., in "big data" environments); for example, regulations are being continuously developed as to usage and storage of certain types of data (e.g., personal data), and enforcing such regulations may be challenging without data lineage tracking. Such problems may be particularly acute when new regulations come into force when established subscriber models still cause exchange of data that may now be subject to the new regulation. A further technical challenge may be detecting data misuse in such instances, for example when data that is the subject of regulations is being processed and/or used in a manner that contravenes such regulations.

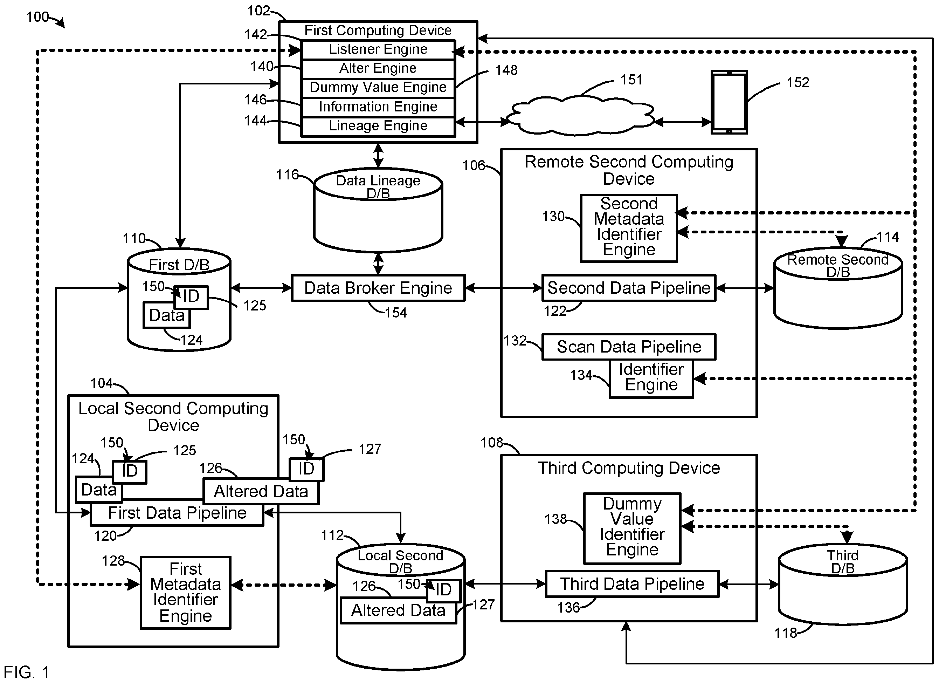

FIG. 1 depicts a system 100 for data lineage tracking, reporting and database updating which may mitigate and/or reduce at least a portion of the aforementioned technical challenges. The components of the system 100 are generally in communication via communication links which are depicted in FIG. 1, and throughout the present specification, as double-ended arrows between respective components. The communication links include any suitable combination of wireless and/or wired communication networks and, similarly, the communication links may include any suitable combination of wireless and/or wired links.

The system 100 will furthermore be described with respect to engines. As used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

The system 100 will furthermore be described with respect to data pipelines, which may ingest and/or receive data, process data and output data. As used herein, a data pipeline may also comprise an engine.

In particular the system 100 comprises a first computing device 102, a local second computing device 104, a remote second computing device 106 and a third computing device 108. The system 100 further comprises a first database 110, a local second database 112 (interchangeably referred to hereafter as the second database 112), a remote second database 114, a data lineage database 116, and a third database 118. In some examples, one or more of the second database 112 and the third database 118 may be optional.

Each of the computing devices 102, 104, 106, 108 may comprise one or more servers, one or more cloud computing devices, and the like. The computing devices 102, 104 may be local to each other, and/or associated with a same entity; indeed, at least a portion of the functionality of the computing devices 102, 104, as described herein, may be combined. The term "local", however, does not necessarily include the computing devices 102, 104 being geographically local, though, in some instances, the computing devices 102, 104 may be geographically local. Rather, the term "local" is understood to include the computing devices 102, 104 being associated with a same entity and/or to perform a common task. For example, the computing devices 102, 104 may be operated by a same entity to provide data to the remote second computing device 106 and/or the third computing device 108.

Conversely, the remote second computing device 106 is understood to be remote from the computing devices 102, 104 and may be associated with an entity different from that associated with the computing devices 102, 104, though such an entity may be a subsidiary of the entity associated with the computing devices 102, 104.

The computing devices 104, 106 are each referred to as "second" computing devices, however, as they may perform certain same or similar functionality, as described herein. In particular, the local second computing device 104 may implement a first data pipeline 120, and the remote second computing device 106 may implement a second data pipeline 122; the data pipelines 120, 122, may perform similar types of data processing on given data 124 stored at the first database 110, as described herein.

However, the first data pipeline 120 may be a component of a local data environment that is local to the first database 110. The term local data environment is understood to include a local system of data processing components.

Similarly, the second data pipeline 122 may be a component of a remote data environment that is remote from the first database 110. The term remote data environment is understood to include a remote system of data processing components that is "remote" from a local system of data processing components.

As depicted, the given data 124 includes metadata 125, which may include any suitable metadata including, but not limited to, a timestamp that the given data 124 was generated, keywords associated with the given data 124, an author of the given data 124, permissions associated with the given data 124, and/or any other suitable metadata.

While only one set of given data 124 is depicted in FIG. 1, the first database 110 may store tens to hundreds to thousands of sets of data 124 including, but not limited to millions, to hundreds of millions, sets of given data 124; any such sets of given data 124 are understood to include respective metadata 125.

Data processing by the respective data pipelines 120, 122 may alter the given data 124 to generate altered given data 126 which may at least partially preserve the given data 124, but alter the structure, and the like, of the given data 124, though it is understood that such data processing may further at least partially preserve metadata 125 of the given data 124, such that metadata 125 of the given data 124, and metadata 127 of the altered given data 126 may the same or similar and/or include same and/or similar fields. It is further understood that the data pipelines 120, 122 may alter the given data 124 in different ways, for example for different types of later data processing. For example, the data pipelines 120, 122 may alter the given data 124 into different formats suitable for later processing by other systems and the like. In particular, the first data pipeline 120 may alter the given data 124 into a format, represented by the altered given data 126, suitable for later processing by the third computing device 108.

As depicted, the given data 124 may be received at the local second computing device 104 from the first database 110, and the altered given data 126 may be output to, and at least temporally stored at, the local second database 112.

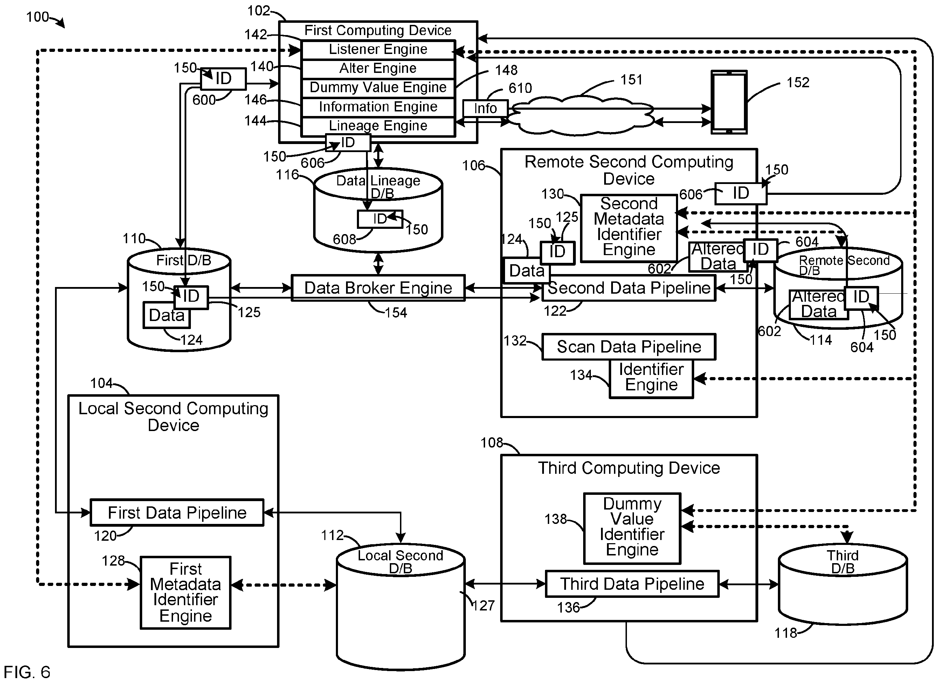

Furthermore, while in FIG. 1, only the first data pipeline 120 of the local second computing device 104 is depicted as receiving the given data 124 to generate the altered given data 126, it is understood that the remote second computing device 106 may also receive the given data 124 and generate respective altered given data, as described herein with respect to FIG. 6.

In particular, the computing devices 102, 104 and the respective data pipelines 120, 122 may comprise technologically up-to-date computing devices 102, 104 that operate the data pipelines 120, 122 according to modem computing standards and hence have certain technological flexibility when deploying new applications and/or engines therein. In particular, as will be described herein, the computing devices 102, 104 are understood to be capable of implementing respective metadata identifier engines 128, 130 which enables certain data lineage tracking functionality of the system 100. Indeed, as depicted, the computing devices 102, 104 are implementing the respective metadata identifier engines 128, 130. The metadata identifier engines 128, 130 are generally configured to identify and/or detect certain types of identifiers in metadata of altered given data, for example as respectively stored at the local second database 112 and the remote second database 114, described in more detail below, and provide an indication of usage of the altered given data to the first computing device 102.

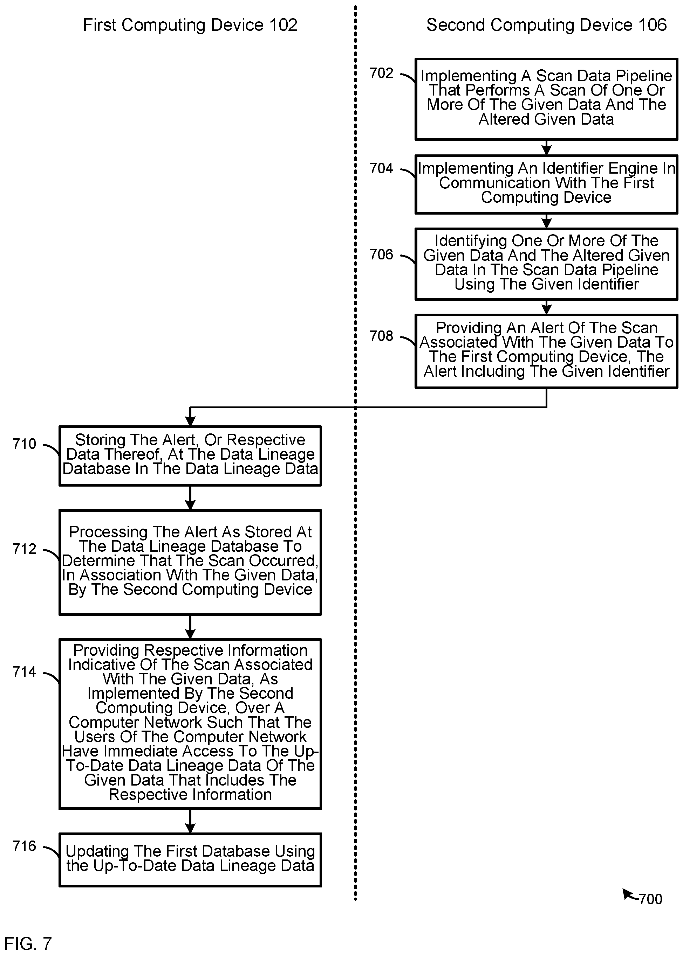

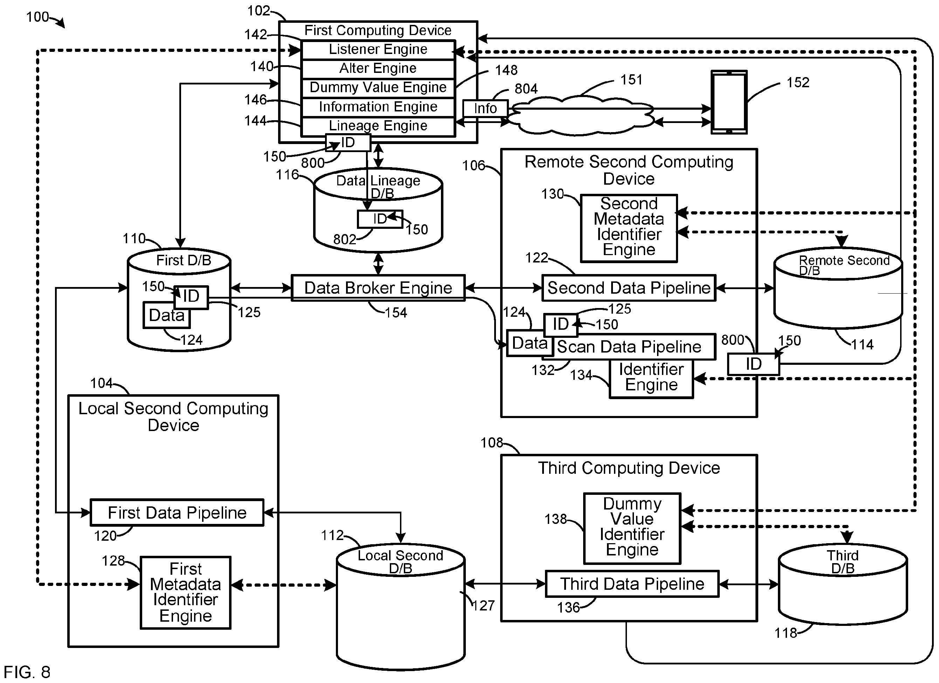

Due to such modem computing standards and/or such technological flexibility, the local second computing device 104 may be optionally further configured to implement a scan data pipeline 132, which scans given data and/or respective altered given data for example to determine whether, or not, the given data and/or the respective altered given data, meets certain types of criteria, described in more detail below but which may include, but is not limited to, criteria relating to the given data and/or respective altered given data complying with certain privacy standards. Similarly, the local second computing device 104 may implement an identifier engine 134 which may identify one or more of the given data and the altered given data in the scan data pipeline 132 using a given identifier and provide an alert of the scan to the first computing device 102, as described herein with respect to FIG. 7 and FIG. 8.

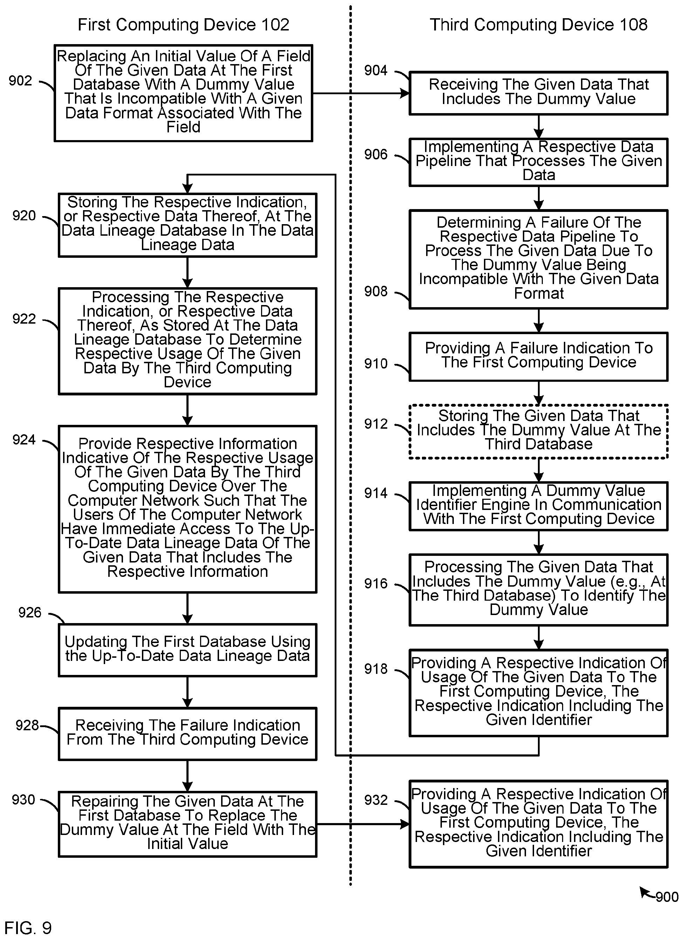

In contrast, the third computing device 108 may also implement a third data pipeline 136 however, the third computing device 108 and the third data pipeline 136 may be part of a legacy data processing system, and may lack certain functionality and/or flexibility of the computing devices 104, 106, and the data pipelines 120, 122. However, the third data pipeline 136 may receive altered given data 126 stored at the local second database 112 and process the altered given data 126, and which may generate further altered given data; the altered given data 126 and/or the further altered given data may be stored at the third database 118. In particular, as will be described herein, the third computing device 108 and the third data pipeline 136 may not be capable of implementing a metadata identifier engine. As such, the third computing device 108 may be adapted in a manner that enables data lineage tracking, for example by implementing a dummy value identifier engine 138, which may identify certain types of values in fields of the altered given data and/or the further altered given data, as stored in the third database 118, and/or as processed by the third data pipeline 136, as described herein with respect to FIG. 9, FIG. 10, FIG. 11 and FIG. 12.

Returning to the first computing device 102, the first computing device 102 is generally configured to implement various engines for performing given functionality as described herein.

In particular, the first computing device 102 may implement an alter engine 140, a listener engine 142, a lineage engine 144, an information engine 146 and a dummy value engine 148. Functionality of the engines 140, 142, 144, 146, 148 are described herein.

The alter engine 140 is configured to alter metadata 125 of the given data 124 at the first database 110 to include a given identifier 150 ("ID" in FIG. 1), which generally identifies the given data 124 has having originated from the first database 110, and the like. In general, the alter engine 140 may alter metadata 125 of the given data 124 to uniquely identify the given data 124 via the given identifier 150, in a manner that also enables the altered given data 126 to be identified as having originated from the first database 110. For example, the given identifier 150 may comprise a first given alphanumeric identifier of the first database 110 (e.g., such as an alphanumeric name, a network address, and the like), and a second alphanumeric identifier that uniquely identifies the given data 124, such as a hash of the given data 124 (e.g., generated using any suitable hash algorithm such as a Secure Hash Algorithm (SHA), and the like). In some examples, the first given alphanumeric identifier and the second given alphanumeric identifier may be separated by a given delimiter character (e.g., such as "$", "#", amongst other possibilities) and/or the given identifier 150 may have any other suitable structure.

As depicted, when a data pipeline 120 (e.g., and/or the second data pipeline 122) alters the given data 124 to the altered given data 126, at least some portion of the metadata 125 of the given data 124 is preserved and/or unchanged, such that, in particular, the metadata 127 of the altered given data 126 also includes the given identifier 150.

In general, the metadata identifier engines 128, 130 are configured to identify, in metadata of altered given data, the given identifiers provided by the alter engine 140, for example according to a common identifier of the first database 110 and/or a structure of the given identifiers, and the like, and provide an indication of usage of the altered given data to the first computing device 102, the indication including the given identifier.

The listener engine 142 is generally configured to "listen" for, and/or receive, indications from the metadata identifier engines 128, 130 and the dummy value identifier engine 138 (and optionally listen for other types of data received from the computing devices 104, 106, 108). Such indications generally indicate that given data is being used by a respective computing device 104, 106, 108, for example in a format of altered given data, and may indicate a data lineage of the given data. The listener engine 142 may hence be generally configured to process messages, and/or data, received at the first computing device 102 and determine whether such messages and/or data comprise an indication from a metadata identifier engine 128, 130 or the dummy value identifier engine 138. For example, the listener engine 142 may be configured to determine whether such messages and/or data are in a format associated with the metadata identifier engine 128, 130 and/or the dummy value identifier engines 128, and/or whether such messages and/or data include information identifying the messages and/or data as having originated from a metadata identifier engine 128, 130 and/or the dummy value identifier engines 128. Hence, it is understood that the metadata identifier engines 128, 130 and the dummy value identifier engines 128 may generate respective indications according to a given format and/or the metadata identifier engines 128, 130 and the dummy value identifier engines 128 may generate respective indications that include respective identifiers that identify the indications has having originated from a particular metadata identifier engines 128, 130 or the dummy value identifier engines 128. In some examples, the listener engine 142 may be configured to "listen" for failure indications from the third computing device 108.

The listener engine 142 may pass such indications to the lineage engine 144.

The lineage engine 144 may store the indications, and/or respective data received of the indications, at the data lineage database 116. As such, the data lineage database 116 generally stores data lineage data (not depicted in FIG. 1) indicative of usage by given data. For example, the indications from the metadata identifier engines 128, 130 and the dummy value identifier engines 128 may further identify at which computing device 104, 106, 108 given data was used, and such information is stored at the data lineage database 116. Hence, the data lineage database 116 generally stores data lineage data of the given data.

The information engine 146 may process data lineage data stored at the data lineage database 116 to generate information indicative of the usage of the given data by a computing device 104, 106, 108. Such information may be in the form of a report, and the like. Such information may be provided over a computer network 151, and the like, such that users of the computer network 151, for example as represented by at least one communication device 152 in FIG. 1, have immediate access to up-to-date data lineage data of the given data. While one communication device 152 is depicted, the system 100 may comprise any suitable number of communication devices 152, which may be in a form of mobile devices, personal computers, laptops, computing terminals, and/or any other suitable format, and which may include any suitable input and output devices, for example a keyboard and/or a pointing device, and the like, operated by a user, to request data lineage data from the first computing device 102, and a display screen, and the like (and/or any other suitable output device) for providing such data lineage data.

For example, such information and/or reports indicative of the usage of the given data (e.g., data lineage data) may be generated by the information engine 146 on demand by a communication device 152, and provided to the communication device 152 when generated, and/or such information and/or reports may be automatically provided to the communication device 152 by the information engine 146 periodically and/or when certain criteria are met, such as when a threshold level of changes to the data lineage data stored at the data lineage database 116 occurs (e.g., a 20% change, a 40% change, amongst other possibilities) and/or when no changes associated with certain given data stored at the first database 110 occur within a given time period, such as one week, one month, six months, amongst other possibilities).

In some examples, information and/or reports indicative of the usage of the given data (e.g., data lineage data) may indicate that certain given data is being used by one or more of the computing devices 104, 106, 108, and furthermore that one or more of the computing devices 104, 106, 108 may be processing and/or using the certain given data that is not compliant with certain regulations. In these instances, the communication device 152 may control the first computing device 102 to update the first database 110 to indicate that certain given data is no longer to be provided to one or more of the computing devices 104, 106, 108 and/or may be deleted, for example freeing up space at the first database 110 and saving bandwidth in the system 100.

In other examples, when no changes associated with certain given data stored at the first database 110 occur within a given time period, such lack of change may indicate that the certain given data is not being used, and may be deleted, for example freeing up space at the first database 110 and saving bandwidth in the system 100.

Such updates to the first database 110 may occur via any suitable combination of the alter engine 140, the lineage engine 144 and the information engine 146, and/or may occur via another engine of the first computing device 102, not depicted.

The dummy value engine 148 may be generally configured to replace an initial value of a field of the given data 124 at the first database 110 with a dummy value that is incompatible with a given data format associated with the field. For example a "price" field, at which a numeric value is generally stored, may be replaced by a dummy value that includes at least one letter and/or a special character. The given data 124 with the dummy value may be provided to the third data pipeline 136 of the third computing device 108, for example in the form of altered given data (e.g., similar to the altered given data 126, but including a dummy value). The dummy value may generally cause a failure in processing of the altered given data by the third data pipeline 136, and the dummy value identifier engine 138 may detect the dummy value of the altered given data in the third data pipeline 136 and/or as stored at the third database 118, and provide a provide a respective indication of usage of the given data 124 to the first computing device 102. As the altered given data may include the given identifier 150 in the metadata 127 of the altered given data, the respective indication of usage of the given data 124, provided by the dummy value identifier engine 138 to the first computing device 102, may include the given identifier, so that the lineage engine 144 may store the respective indication of usage, and the like, at the data lineage database 116 so that the information engine 146 may generate a report, and the like, of usage of the given data 124 by the third computing device 108.

The third computing device 108 may further provide an indication of the failure to process the altered given data 126 to the first computing device 102, which may "repair" the given data 124 by replacing the dummy value in a field with the initial value in the field, so that the given data 124 may be again provided to the third computing device 108 for processing by the third data pipeline 136, but this time no failure should occur. In some examples, the dummy value engine 148 may be further configured to repair" the given data 124 accordingly though in other examples such a "repair" may be performed by another engine of the system 100. Regardless, it is understood that a record of the initial value that the dummy value replaced is stored, for example at the database 110, and/or at the first computing device 102, to facilitate the repair.

For completeness, FIG. 1 further depicts a data broker engine 154 which may provide given data, such as the given data 124, from the first database 110 to the remote second computing device 106. For example, the data broker engine 154 may be instructed (e.g., by the first computing device 102, or another computing device) as to which given data stored at the first database 110 is to be provided to the remote second computing device 106. In particular, the data broker engine 154 may manage subscriptions of data of the first database 110 by the remote second computing device 106. As depicted, the data broker engine 154 may interface with the data lineage database 116 to provide generic indications of which given data of the first database 110 has been provided to the remote second computing device 106. However, not all data provided to the remote second computing device 106 may be processed by the second data pipeline 122 and hence such generic indications may not indicate which data is actually processed by the second data pipeline 122. However, the indications from the second metadata identifier engine 130 may indicate which data is actually processed by the second data pipeline 122 and hence is a better indication of data lineage than indications provided by the data broker engine 154. While the data broker engine 154 is depicted as a stand-alone component of the system 100, the data broker engine 154 may be implemented by any suitable computing device, including, but not limited to, the first computing device 102 and/or the local second computing device 104, and the like.

For clarity, in FIG. 1, and throughout, communication links between the engines 128, 130, 138 and other components of the system 100, such as with the first computing device 102, are depicted as broken double ended arrows. Furthermore, a communication link is depicted between the third computing device 108 and the first computing device 102, and while communication links are not depicted between the computing devices 104, 106 and the first computing device 102, such communication links may nonetheless be present.

Furthermore, while the computer network 151 is depicted as providing communication links between the first computing device 102 and the communication device 152, it is understood that the computer network 151 may provide all, or at least a portion of, communication links between other components of the system 100. Communication links of the system 100 not provided by the computer network 151 may be provided by any other suitable communication network.

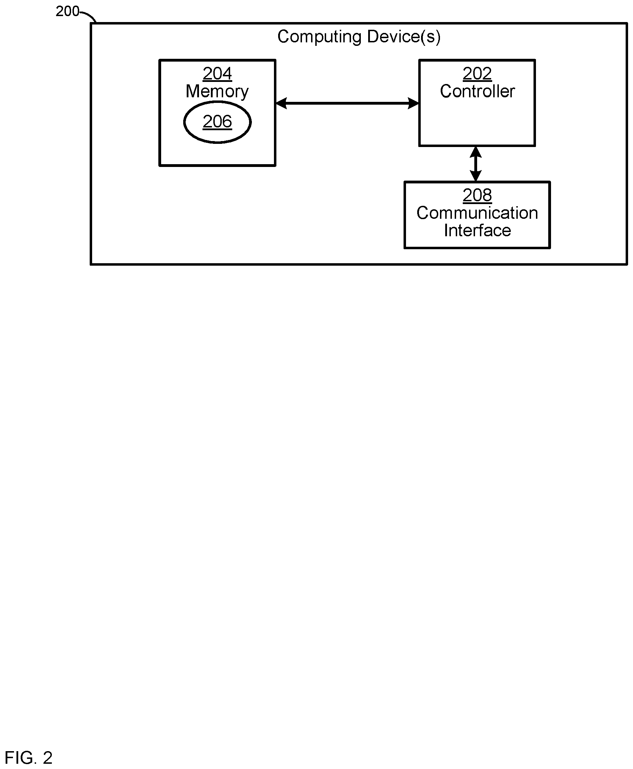

Turning to FIG. 2, before discussing the functionality of the system 100 in greater detail, certain components of a computing device 200 will be described. While depicted as one device, the computing device 200 may comprise one or more computing devices and/or one or more servers and/or one or more cloud computing devices that may be geographically distributed. The depicted computing device 200 may represent any of the computing devices 102, 104, 106, and the like.

As shown in FIG. 2, the computing device 200 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the computing device 200 to communicate with the other computing devices of the system 100, though it is understood such communication may occur locally when components of the system 100 are combined. The communication interface 208 therefore may include any necessary components (e.g., network interface controllers (NICs), radio units, and the like) to communicate via a network. The specific components of the communication interface 208 may be selected based upon the nature of a network used to communicate, and/or local communication between components of the system 100, and the like. The computing device 200 can also include input and output devices connected to the controller 202, such as keyboards, mice, displays, and the like (not shown).

The components of the computing device 200 mentioned above can be deployed in a single enclosure, or in a distributed format. In some examples, therefore, the computing device 200 includes a plurality of processors, sharing the memory 204 and communication interface 208, or having distinct associated memories and communication interfaces. As such, it is understood that the memory 204, and/or a portion of the memory 204, may be internal (e.g., as depicted) or external to the computing device 200; regardless, the controller 202 is understood to have access to the memory 204.

The memory 204 also stores a plurality of computer-readable programming instructions, executable by the controller 202, in the form of various applications, including the application 206. As will be understood by those skilled in the art, the controller 202 executes the instructions of the application 206 (and any other suitable applications) in order to perform various actions defined by the instructions contained therein. In the description below, the controller 202, and more generally the computing device 200, are said to be configured to perform those actions. It will be understood that they are so configured via the execution (by the controller 202) of the instructions of the applications stored in memory 204. Furthermore, the application 206 may be adapted

In some examples, the application 206 may comprise one or more machine learning algorithms trained to implement functionality described herein. However, alternatively, or in addition, the application 206 may comprise one or more programmatic algorithms.

Furthermore, the application 206 may be adapted to include computer-readable programming instructions for any of the computing device 102, 104, 106.

For example, while not depicted, the application 206 may comprise any suitable modules for implementing any suitable engines and/or pipelines implemented by a particular computing device 102, 104, 106. For example, when the application 206 represents an application implemented by the first computing device 102, the application 206 is understood to include modules corresponding to the engines 140, 142, 144, 146, 148. Similarly, when the application 206 represents an application implemented by the local second computing device 104, the application 206 is understood to include modules corresponding to the first data pipeline 120 and the first metadata identifier engine 128. Similarly, when the application 206 represents an application implemented by the local second computing device 104, the application 206 is understood to include modules corresponding to the data pipelines 122, 132 and the engines 130, 134.. Similarly, when the application 206 represents an application implemented by the third computing device 108, the application 206 is understood to include modules corresponding to the third data pipeline 136 and the dummy value identifier engine 138.

While structure of the communication device 152 is not described in detail, the communication device 152 is understood to have a similar structure as the computing device 200, but adapted for the respective functionality of the communication device 152.

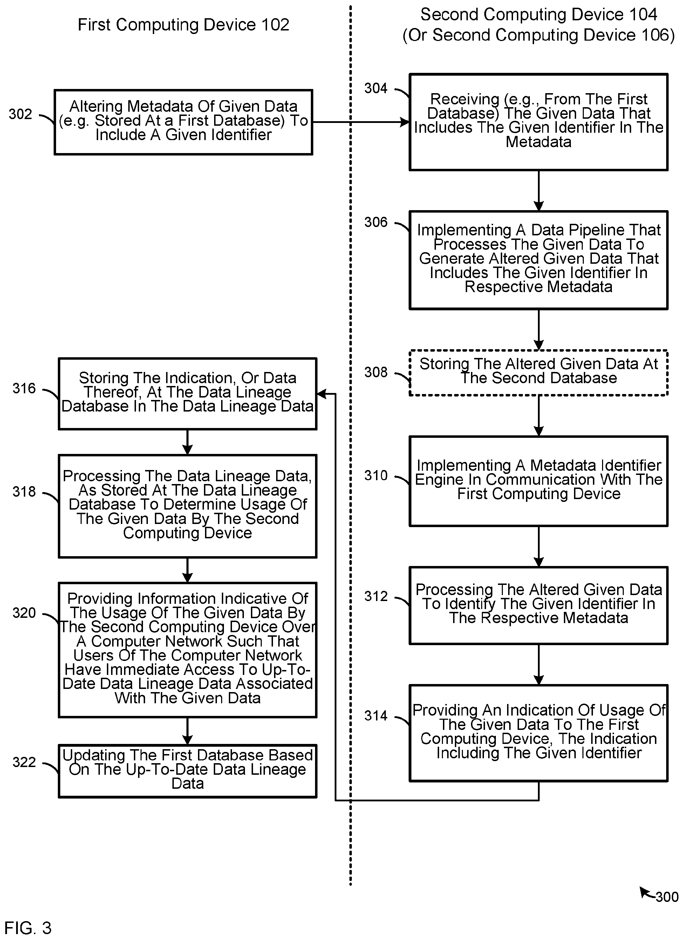

Attention is now directed to FIG. 3 which depicts a flowchart representative of a method 300 for data lineage tracking, reporting and database updating. The operations of the method 300 of FIG. 3 correspond to machine readable instructions that are executed by the computing devices 102, 104 and specifically by respective controllers 202 thereof. In the illustrated example, relevant instructions represented by the blocks of FIG. 3 are stored at a respective memory 204 of a computing device 102, 104 for example, as a respective application 206. The method 300 of FIG. 3 is one way in which the computing devices 102, 104 and/or the system 100 may be configured. Furthermore, the following discussion of the method 300 of FIG. 3 will lead to a further understanding of the system 100, and its various components.

The method 300 of FIG. 3 need not be performed in the exact sequence as shown and likewise various blocks may be performed in parallel rather than in sequence. Accordingly, the elements of method 300 are referred to herein as "blocks" rather than "steps." The method 300 of FIG. 3 may be implemented on variations of the system 100, as well.

Furthermore, while the method 300 is described with respect to the local second computing device 104, the method 300 may alternatively be implemented by the first computing device 102 and the remote second computing device 106.

At a block 302, the first computing device 102 alters metadata 125 of the given data 124 (e.g., as stored at the first database 110) to include a given identifier 150, as already been described. While the first computing device 102 may alter the metadata 125 of the given data 124, as stored at the first database 110, to include a given identifier 150, the first computing device 102 may alter the metadata 125 of the given data 124 to include a given identifier 150 in any suitable manner (e.g., regardless of the given data 124 being stored at the first database 110), The block 302 may be implemented via the alter engine 140.

Furthermore, the block 302 may be performed in response any suitable indication that the given data 124 is to be provided to the second computing device 104 (and/or the third computing device 108), for example at a scheduled time for providing data, that includes the given data 124, to the second computing device 104 (and/or the third computing device 108) as part of a subscription to such data by the second computing device 104 (and/or the third computing device 108).

At a block 304, the local second computing device 104 receives (e.g., from the first database 110), the given data 124 that includes the given identifier 150 in the metadata 125. For example the local second computing device 104 may receive the given data 124 as part of a subscription associated with the local second computing device 104 and/or another computing device. However, the local second computing device 104 may receive the given data 124 that includes the given identifier 150 in the metadata 125 in any suitable manner (e.g., via the first database 110, and/or from the first computing device 110, and the like). In particular examples, the local second computing device 104 may service a subscription to the given data 124 by the third computing device 108. For example, the first data pipeline 120 may be to process the given data 124 into a format suitable for processing by the third data pipeline 136, as represented by the altered given data 126.

At a block 306, the local second computing device 104 implements the first data pipeline 120 that processes the given data 124 to generate the altered given data 126 that includes the given identifier 150 in respective metadata 127. As mentioned previously, in some examples, the first data pipeline 120 may process the given data 124 into a format suitable for processing by the third data pipeline 136, as represented by the altered given data 126, for example as part of a subscription to the given data 124.

At a block 308, which may be optional, the local second computing device 104 stores the altered given data 126 at the local second database 112. For example, output from the first data pipeline 120 may be automatically stored at the local second database 112. As the block 308 may be optional, the block 308 is depicted in dashed lines.

At a block 310, the local second computing device 104 implements the first metadata identifier engine 128 in communication with the first computing device 102. A block 312 and a block 314, described hereafter, are understood to be implemented via the first metadata identifier engine 128.

At a block 312, the local second computing device 104, via the first metadata identifier engine 128, processes the altered given data 126 to identify the given identifier 150 in the respective metadata 127. For example, the first metadata identifier engine 128 may process data of the local second database 112 periodically and/or as data is stored at the local second database 112, to search for data that includes given types of identifiers, such as identifiers that include a first given alphanumeric identifier that identifies the first database 110, and the like. Alternatively, the given identifier 150 may have a given structure that is different from other values of the metadata 127, and the first metadata identifier engine 128 may process data of the local second database 112 to search for data that includes a given structure type of identifiers, such as identifiers that include a first alphanumeric identifier and a second alphanumeric identifier, for example separated by a given delimiter character, and the like. In examples where the local second database 112 is optional, the altered given data 126 may be stored at the local second database 112, but the method 300 may not depend on the altered given data 126 being stored at the local second database 112. For example, regardless of whether the altered given data 126 is stored the local second database 112, the local second computing device 104 may detect the altered given data 126 in the first data pipeline 120, and process the altered given data 126, as detected in in the first data pipeline 120, to identify the given identifier 150 in the respective metadata 127; for example, the local second computing device 104 may pass the altered given data 126 to the first metadata identifier engine 128 before the altered given data 126 is stored at the local second database 112. Hence, while hereafter examples are described with respect to the first metadata identifier engine 128 processing the altered given data 126 as stored at the local second database 112, it is understood that the local second computing device 104 may process the altered given data 126 to identify the given identifier 150 in the respective metadata 127 in any suitable manner.

At a block 314, the local second computing device 104, via the first metadata identifier engine 128, provides an indication of usage of the given data 124 and/or the altered given data 126 to the first computing device 102, the indication including the given identifier 150.

The indication of usage is understood to include any suitable combination of an identifier of the first database 110, and identifier of the given data 124, an identifier of the local second computing device 104 (e.g., such as an alphanumeric name, a network address, and the like), a user and/or entity associated with the local second computing device 104, a process implemented by the first data pipeline 120, and/or any other suitable data, available to the first metadata identifier engine 128, and which may be included in the given identifier 150.

At a block 316, the first computing device 102 stores the indication, and/or data thereof, at the data lineage database 116 in data lineage data. For example, the block 316 is understood to include receiving the indication from the first metadata identifier engine 128 at the first computing device 102, for example via the listener engine 142. Furthermore, storing of the indication may occur via the lineage engine 144.

At a block 318, the first computing device 102 processes the data lineage data, as stored at the data lineage database 116, to determine usage of the given data 124 by the local second computing device 104.

At a block 320, the first computing device 102 provides information indicative of the usage of the given data 124 by the local second computing device 104 over the computer network 151 such that users of the computer network 151 have immediate access to up-to-date data lineage data associated with the given data 124.

For example, the information indicative of the usage of the given data 124 by the local second computing device 104 may be provided to the communication device 152 via the computer network 151, upon demand by the communication device 152 and/or automatically (e.g., periodically and/or when one or more of the aforementioned threshold are met by data lineage data of the data lineage database 116.

In some examples, such processing of the indication, at the block 318, and providing the information indicative of the usage of the given data 124 by the local second computing device 104 over the computer network 151, at the block 320, may occur via the information engine 146.

In some examples, the information indicative of the usage of the given data 124 by the local second computing device 104 may identify one or more of: the given data 124; the local second computing device 104; a user associated with the local second computing device 104; an entity associated with the local second computing device 104; a process implemented by the first data pipeline 120 and/or any other suitable information indicative of a data lineage of the given data 124. For example, information such as a user associated with the local second computing device 104, an entity associated with the local second computing device 104, a process implemented by the first data pipeline 120, and the like, may be stored at any suitable database of the system 100, such as one or more of the databases 110, 116, and retrieved using an identifier of the local second computing device 104 received with, and/or in, the indication of the block 312.

At a block 322, the first computing device 102 updates the first database 110 based on the up-to-date data lineage data. For example, the up-to-date data lineage data may indicate that the given data 124 is no longer in use and/or other data available to the system 100 may indicate that the local second computing device 104, and/or the third computing device 108 to which the local second computing device 104 provides data, may no longer meet certain regulatory standards that may govern the given data 124. In this instance, when the up-to-date data lineage data indicates that the given data 124 is being used by the local second computing device 104, for example to provide to the third computing device 108, the first database 110 may be updated to indicate that the given data 124 is no longer to be supplied to the local second computing device 104 (or the third computing device 108), and the like, though the given data 124 may be provided to other computing devices, such as the remote second computing device 106. Such updates may include, but is not limited to, changing permissions associated with the given data 124, at the first database 110, to indicate that the local second computing device 104 no longer has permission to access the given data 124.

In examples where the up-to-date data lineage data may indicate that the given data 124 is no longer in use, such an indication may be determined by way of the given data 124 not having been used for a given period of time, such as one month, two months, six months, and the like. For example, the up-to-date data lineage data may indicate a last time the given data 124 was used by the local second computing device 104, or other computing devices of the system 100, and when the given data 124 has not been used for the given period of time, the given data 124 may be deleted from the first database 110.

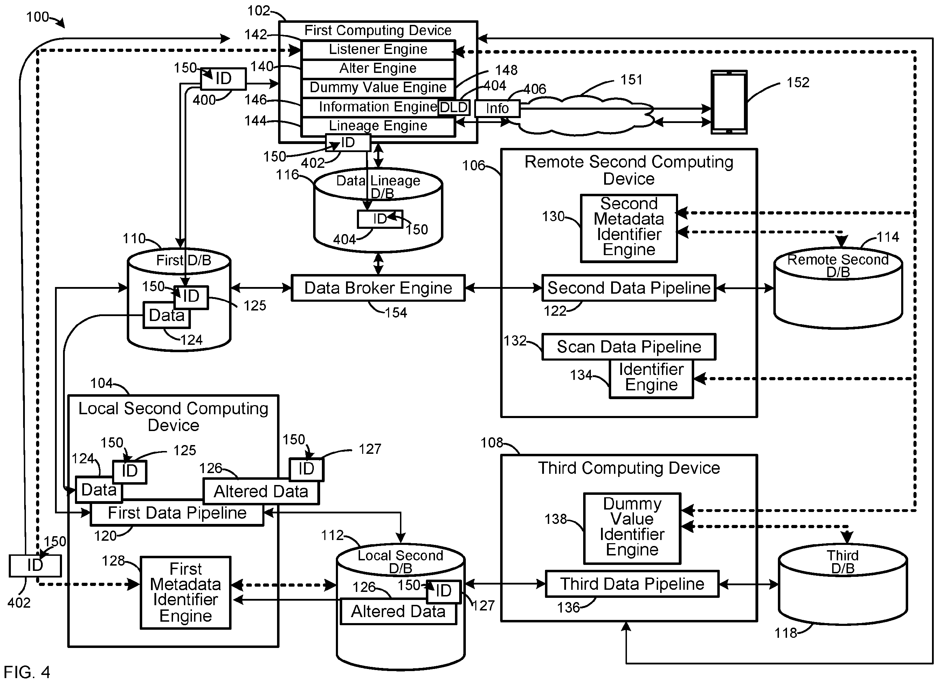

Attention is next directed to FIG. 4, FIG. 5, and FIG. 6, which depict aspects of the method 300. FIG. 4, FIG. 5, and FIG. 6 are understood to be similar to FIG. 1, with like components having like numbers.

FIG. 4 depicts the first computing device 102 altering (e.g., at the block 302) the metadata 125 of the given data 124 to include the given identifier 150, for example by providing a command 400 that includes the given identifier 150 to the first database 110 that is specific to the given data 124. While not depicted, the first computing device 102 may first retrieve the given data 124 from the first database 110 and generate a hash thereof, which is incorporated into the given identifier 150. In some examples, such a hash may be stored at the first database 110 in association with the given data 124, such that the given data 124 may be more readily identified from a hash thereof from the given identifier 150.

The local second computing device 104 receives (e.g., at the block 304) the given data 124 that includes the given identifier 150 in the metadata 125 (e.g., due to a subscription, and the like to data that includes the given data 124), and implements (e.g., at the block 306) the first data pipeline 120 that processes the given data 124 to generate the altered given data 126 that includes the given identifier 150 in the respective metadata 127. The local second computing device 104 stores (e.g., at the block 308) the altered given data 126 at the local second database 112.

The local second computing device 104 implements (e.g., at the block 310) the first metadata identifier engine 128 to process (e.g., at the block 312) the altered given data 126 to generate and provide (e.g., at the block 314) an indication 402 of usage of the given data 124 and/or the altered given data 126 to the first computing device 102, the indication 402 including the given identifier 150.

The first computing device 102 receives (e.g., via the listener engine 142) and stores (e.g., via the lineage engine 144, at the block 316) the indication 402, or respective data thereof, at the data lineage database 116, for example as data lineage data 404, the data lineage data 404 including the given identifier 150, and any suitable identifiers (not depicted) associated with the local second computing device 104 and/or the first data pipeline 120 indicating where and/or how the given data 124 was used.

Furthermore the first computing device 102 processes (e.g., at the block 318) the data lineage data 404 to determine usage of the given data 124 by the local second computing device 104, and provides (e.g., at the block 320) to the at least one communication device 152, over the computer network 151, information 406 indicative of the usage of the given data 124 by the local second computing device 104, such that users of the computer network 151 have immediate access to up-to-date data lineage data 404 associated with the given data 124. For example, the information 406 may include at least a portion of the data lineage data 404 that indicates usage of the given data 124 by the local second computing device 104. The data lineage data 404 is understood to represent up-to-date data lineage data and hence the data lineage data 404 is interchangeably referred to hereafter as the up-to-date data lineage data 404.

The information 406 may be processed by, and/or reviewed at, the communication device 152 using any suitable application.

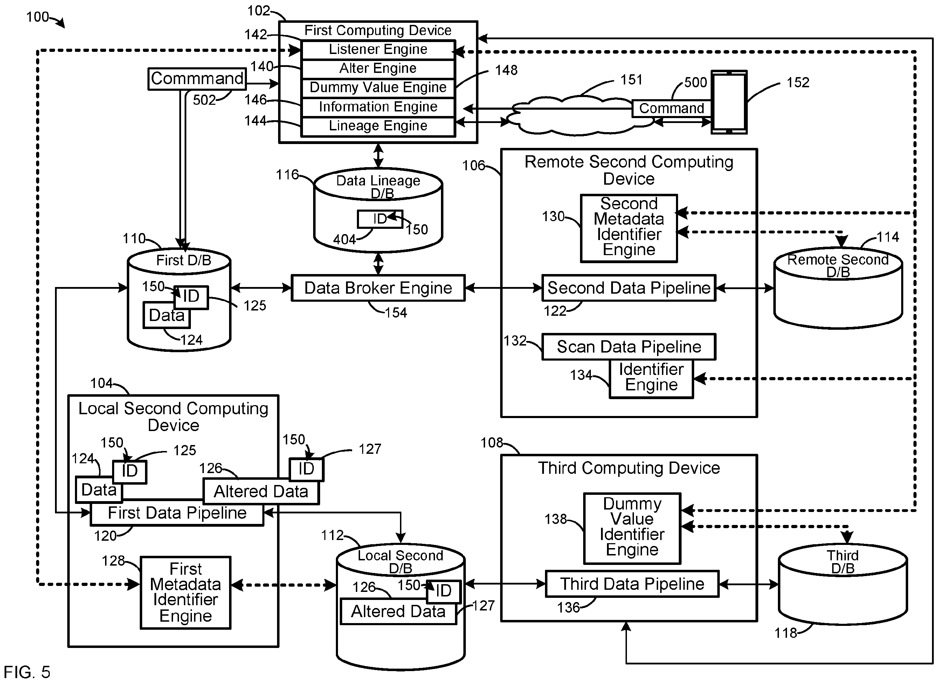

Attention is next directed to FIG. 5, which is understood to follow in time from FIG. 4. In FIG. 5, the communication device 152, having received the information 406, provides a command 500 to the first computing device 102 to alter and/or update (e.g., at the block 322) the first database 110 based on the up-to-date data lineage data 404, for example as represented by the information 406. The command 500 may be to update permissions of the given data 124, change subscriptions to the given data 124, delete the given data 124, and/or to perform any other suitable technical action associated with the given data 124 which may alter access to the given data 124 at the first database 110, including, but not limited to, changing a subscription to data, that presently includes the given data 124, to exclude the given data 124. For example, a subscription to such data by the local second computing device 104 and/or the third computing device 108 may be altered and/or changed and/or cancelled. For example, the first computing device 102 receives the command 500 and may generate a similar command 502, but in a database command format, and provide the command 502 to the first database 110 to implement instructions of the command 502.

It is understood that, alternatively, the method 300 may be implemented with respect to the remote second computing device 106.

For example, FIG. 6 depicts the first computing device 102 altering (e.g., at the block 302) the metadata 125 of the given data 124 to include the given identifier 150, for example by providing a command 600 that includes the given identifier 150 to the first database 110 that is specific to the given data 124. While not depicted, the first computing device 102 may first retrieve the given data 124 from the first database 110 and generate a hash thereof, which is incorporated into the given identifier 150.

The remote second computing device 106 receives (e.g., at the block 304) the given data 124 that includes the given identifier 150 in the metadata 125 (e.g., due to a subscription, and the like to data that includes the given data 124), for example via the data broker engine 154, and implements (e.g., at the block 306) the second data pipeline 122 that processes the given data 124 to generate altered given data 602 that includes the given identifier 150 in respective metadata 604. The second computing device 106 stores (e.g., at the optional block 308) the altered given data 602 at the remote second database 114.

The second computing device 106 implements (e.g., at the block 310) the second metadata identifier engine 130 to process (e.g., at the block 312) the altered given data 602 to generate and provide (e.g., at the block 314) an indication 606 of usage of the given data 124 and/or the altered given data 602 to the first computing device 102, the indication 606 including the given identifier 150. While the second metadata identifier engine 130 s described as processing the altered given data 602 as stored at the remote second database 114, the second metadata identifier engine 130 may receive the altered given data 602 in any suitable manner.

The first computing device 102 receives (e.g., via the listener engine 142) and stores (e.g., via the lineage engine 144, at the block 316) the indication 606, or data thereof, at the data lineage database 116, for example as data lineage data 608, the data lineage data 608 including the given identifier 150, and any suitable identifiers (not depicted) associated with the remote second computing device 104 and/or the second data pipeline 122 indicating where and/or how the given data 124 was used.

Furthermore the first computing device 102 processes (e.g., at the block 318) the data lineage data 608 to determine usage of the given data 124 by the second computing device 106, and provides (e.g., at the block 320) to the at least one communication device 152, over the computer network 151, information 610 indicative of the usage of the given data 124 by the second computing device 106, such that users of the computer network 151 have immediate access to up-to-date data lineage data 608 associated with the given data 124. For example, the information 610 may include at least a portion of the data lineage data 608 that indicates usage of the given data 124 by the second computing device 106. The data lineage data 608 is understood to represent up-to-date data lineage data and hence the data lineage data 608 is interchangeably referred to hereafter as the up-to-date data lineage data 608.

The information 610 may be processed by, and/or reviewed at, the communication device 152 using any suitable application. Similar to as depicted in FIG. 5, the communication device 152 may generate a command, similar to the command 500, to alter and/or update (e.g., at the block 322) the first database 110 based on the up-to-date data lineage data 608, for example as represented by the information 610. The command 500 may be to update permissions of the given data 124, change subscriptions to the given data 124, delete the given data 124, and/or to perform any other suitable technical action associated with the given data 124 which may alter access to the given data 124 at the first database 110, including, but not limited to, changing a subscription to data, that presently includes the given data 124, to exclude the given data 124. For example, the first computing device 102 receives the command from the communication device 152, and may generate a similar command, but in a database command format, and provide such a database command to the first database 110 to implement instructions of the command generated by the communication device 152. For example, a subscription to such data by the remote second computing device 106 may be altered and/or changed and/or cancelled.

Attention is now directed to FIG. 7 which depicts a flowchart representative of a method 700 for data lineage tracking, reporting and database updating. The operations of the method 700 of FIG. 7 correspond to machine readable instructions that are executed by the computing devices 102, 106 and specifically by respective controllers 202 thereof. In the illustrated example, relevant instructions represented by the blocks of FIG. 7 are stored at a respective memory 204 of a computing device 102, 106 for example, as a respective application 206. The method 700 of FIG. 7 is one way in which the computing devices 102, 106 and/or the system 100 may be configured. Furthermore, the following discussion of the method 700 of FIG. 7 will lead to a further understanding of the system 100, and its various components.

The method 700 of FIG. 7 need not be performed in the exact sequence as shown and likewise various blocks may be performed in parallel rather than in sequence. Accordingly, the elements of method 700 are referred to herein as "blocks" rather than "steps." The method 700 of FIG. 7 may be implemented on variations of the system 100, as well.

Furthermore, the method 700 may be performed in conjunction with the method 300, for example when implemented at either, or both, of the second computing devices 104, 106, or the method 700 may be performed independent of the method 300. However, it is understood in the method 700 may include the blocks 302, 304 of the method 300, such that given data 124 that includes the given identifier 150 at the metadata 125 is received at the remote second computing device 106.

At a block 702, the remote second computing device 106 implements the scan data pipeline 132 that performs a scan of one or more of the given data 124 and the altered given data 602, for example to scan one or more of the given data 124 and the altered given data 602 to determine whether, or not, the given data 124 and/or the altered given data 602 meets certain types of criteria, which may include, but is not limited to, criteria relating to the given data 124 and the altered given data 602 complying with certain privacy standards. For example, the scan data pipeline 132 may scan the given data 124 and the altered given data 602 to determine whether, or not, the given data 124 and/or the altered given data 602 complies with General Data Protection Regulations (GDPR), and the like, though any suitable set of criteria is within the scope of the present specification including, but not limited to, criteria defined by one or more of GDPR, California Consumer Privacy Act (CCPA) regulations, Basel Committee on Banking Supervision's standard number 239 (BCBS-239) regulations, Personal Information Protection and Electronic Documents Act (PIPEDA) regulations, Health Insurance Portability and Accountability Act (HIPAA) regulations, and the like.

At block 704, the remote second computing device 106 implements the given identifier engine 134 in communication with the first computing device 102. A block 706 and a block 708, described hereafter, may be implemented via the given identifier engine 134.

At a block 706, the remote second computing device 106 (e.g., via the given identifier engine 134) identifies one or more of the given data 124 and the altered given data 602 in the scan data pipeline 132 using the given identifier 150. For example, similar to the metadata identifier engines 128, 130, the given identifier engine 134 may identify the given data 124 and/or the altered given data 602 using the given identifier 150 in their respective metadata 125, 604. However, rather than process data from the remote second database 114, the given identifier engine 134 may process data being scanned by the scan data pipeline 132. Hence, in general, the given identifier engine 134 determines that the given data 124 and/or the altered given data 602 has been scanned by the scan data pipeline 132.

At a block 708, the remote second computing device 106 (e.g., via the given identifier engine 134) provides an alert of the scan associated with the given data 124 (e.g., a scan of the given data 124 and/or the altered given data 602) to the first computing device 102, the alert including the given identifier 150. The alert generally indicates that the given data 124 and/or the altered given data 602 has been scanned by the scan data pipeline 132 and may include a result of the scan (e.g., the given data 124 and/or the altered given data 602 complies, or does not comply, with given criteria).

At a block 710, the first computing device 102 stores the alert, or respective data thereof, at the data lineage database 116 in data lineage data.

However, in some examples, the first computing device 102 store the alert, or the respective data thereof, at the data lineage database 116, in the data lineage data, only when other data that includes the respective data provided by the alert is not already stored at the data lineage database 116. Put another way, when a scan of the given data 124 and/or the respective altered data 602, has already occurred (e.g., when the given data 124 was previously provided to the second computing device 106), whether or not the given data 124 and/or the respective altered data 602 comply with given criteria may already be stored at the data lineage database 116 and there is no need to again store such data.

At a block 712, the first computing device 102 processes the alert, or the respective data thereof, as stored at the data lineage database 116 to determine that the scan occurred, in association with the given data 124, by the remote second computing device 106.

At a block 714, the first computing device 102 provides respective information indicative of the scan associated with the given data 124, as implemented by the second computing device 106, over the computer network 151 such that the users of the computer network 151 (e.g., represented by the communication device 152) have immediate access to the up-to-date data lineage data of the given data 124 that includes the respective information indicative of the scan which may include, but is not limited to, result of the scan.

At a block 716, the first computing device 102 updates the first database 110 based on the up-to-date data lineage data. For example, the up-to-date data lineage data may indicate that the given data 124 is does not meet the criteria for which the given data 124 and/or the altered given data 602 is scanned, and the first database 110 may be updated to indicate that the given data 124 is no longer to be supplied to the remote second computing device 106, and the like, though the given data 124 may be provided to other computing devices. Such updates may occur via the aforementioned permissions and/or changing subscriptions to data, and/or in any suitable manner.

Attention is next directed to FIG. 8, which depict aspects of the method 700. FIG. 8 is understood to be similar to FIG. 1, with like components having like numbers. It is assumed in FIG. 8 that the given data 124 has already been altered to include the given identifier 150 at the metadata 125.

The second computing device 106 receives the given data 124 that includes the given identifier 150 in the metadata 125 (e.g., due to a subscription, and the like to data that includes the given data 124), for example via the data broker engine 154, and implements (e.g., at the block 702) the scan data pipeline 132 that scans the given data 124 as described herein. Alternatively, or in addition, when the given data 124 is processed by the second data pipeline 122 to generate the altered given data 602, the scan data pipeline 132 may scan the altered given data 602.

The second computing device 106 implements (e.g., at the block 704) the given identifier engine 134 to identify (e.g., at the block 706) one or more of the given data 124 and the altered given data 602 in the scan data pipeline 132, for example using the given identifier 150 to generate and provide (e.g., at the block 708) an alert 800 of the scan, associated with of the given data 124 by the scan data pipeline 132, to the first computing device 102.

The first computing device 102 receives (e.g., via the listener engine 142) and stores (e.g., via the lineage engine 144, at the block 710) the alert 800, or data thereof, at the data lineage database 116, for example as data lineage data 802, the data lineage data 802 including the given identifier 150, and any suitable identifiers (not depicted) associated with the remote second computing device 104 and/or the scan data pipeline 132 indicating that a scan associated with the given data 124 occurred.

Furthermore the first computing device 102 processes (e.g., at the block 712) the data lineage data 802 to determine that the scan occurred, and provides (e.g., at the block 714) to the at least one communication device 152, over the computer network 151, respective information 804 indicative of the scan of the given data 124 by the second computing device 106, such that users of the computer network 151 have immediate access to up-to-date data lineage data 802 that includes the respective information 804. For example, the information 804 may include at least a portion of the data lineage data 802 that indicates a scan associated with the given data 124 occurred using the remote second computing device 106. The data lineage data 802 is understood to represent up-to-date data lineage data and hence the data lineage data 802 is interchangeably referred to hereafter as the up-to-date data lineage data 802.

The information 804 may be processed by, and/or reviewed at, the communication device 152 using any suitable application. Similar to as depicted in FIG. 5, the communication device 152 may generate a command, similar to the command 500, to alter and/or update (e.g., at the block 716) the first database 110 based on the up-to-date data lineage data 802, for example as represented by the information 804. The command may be to update permissions of the given data 124, change subscriptions to the given data 124, delete the given data 124, and/or to perform any other suitable technical action associated with the given data 124 which may alter access to the given data 124 at the first database 110, including, but not limited to, changing a subscription to data, that presently includes the given data 124, to exclude the given data 124. For example, the first computing device 102 receives the command from the communication device 152, and may generate a similar command, but in a database command format, and provide such a database command to the first database 110 to implement instructions of the command generated by the communication device 152. For example, a subscription to such data by the remote second computing device 106 may be altered and/or changed and/or cancelled, for example as the given data 124 may not meet certain criteria that the scan data pipeline 132 scans for.

Attention is now directed to FIG. 9 which depicts a flowchart representative of a method 900 for data lineage tracking, reporting and database updating. The operations of the method 900 of FIG. 9 correspond to machine readable instructions that are executed by the computing devices 102, 108 and specifically by respective controllers 202 thereof. In the illustrated example, relevant instructions represented by the blocks of FIG. 9 are stored at a respective memory 204 of a computing device 102, 108 for example, as a respective application 206. The method 900 of FIG. 9 is one way in which the computing devices 102, 108 and/or the system 100 may be configured. Furthermore, the following discussion of the method 900 of FIG. 9 will lead to a further understanding of the system 100, and its various components.

The method 900 of FIG. 9 need not be performed in the exact sequence as shown and likewise various blocks may be performed in parallel rather than in sequence. Accordingly, the elements of method 900 are referred to herein as "blocks" rather than "steps." The method 900 of FIG. 9 may be implemented on variations of the system 100, as well.

Furthermore, the method 900 may be performed in conjunction with the method 300, for example when implemented at either, or both, of the second computing devices 104, 106, or the method 900 may be performed independent of the method 300.

At a block 902, the first computing device 102 replaces an initial value of a field of the given data 124 at the first database 110 with a dummy value that is incompatible with a given data format associated with the field.

For example, a field of the given data 124 may be generally populated by numeric values, such as a price field. In such an example, a numeric value in such a price field may be replaced by a dummy value that includes at least one letter and/or a special character. However, any suitable dummy value and/or any suitable field is within the scope of the present specification. For example, rather than replace a numeric value with a dummy value that includes at least one letter and/or a special character, fields that "normally" include only letters may be replaced with a dummy value that includes at least one number and/or a special character. Any suitable dummy values are within the scope of the present specification that will cause the third data pipeline 136 to fail, as described herein.

Furthermore, the block 902 may be performed in response any suitable indication that the given data 124 is to be provided to the third computing device 108, for example at a scheduled time for providing data, that includes the given data 124, to the third computing device 108 as part of a subscription to such data by the third computing device 108.

It is furthermore understood that before or after, or in conjunction with the block 902, the block 302 of the method 300 may be implemented such that the given data 124 may further comprise the given identifier 150 in the metadata 125. Such an implementation of the block 302 of the method 300 may occur without otherwise implementing other blocks of the method 300. Put another way, the method 900 may further comprise the block 302 of the method 300.

At a block 904, the third computing device 108 receives the given data 124 that includes the dummy value.

In some examples, the given data 124 may be received via the local second computing device 104, for example in a form of altered data (e.g., similar to the altered given data 126). Put another way, the local second computing device 104 may receive the given data 124, implement the first data pipeline 120, and output altered data that is provided to the third computing device 108.

Put another way, the given data 124 as received at the third computing device 108 may be in the form of altered given data and may be received from the local second computing device 104 as output from the first data pipeline 120.

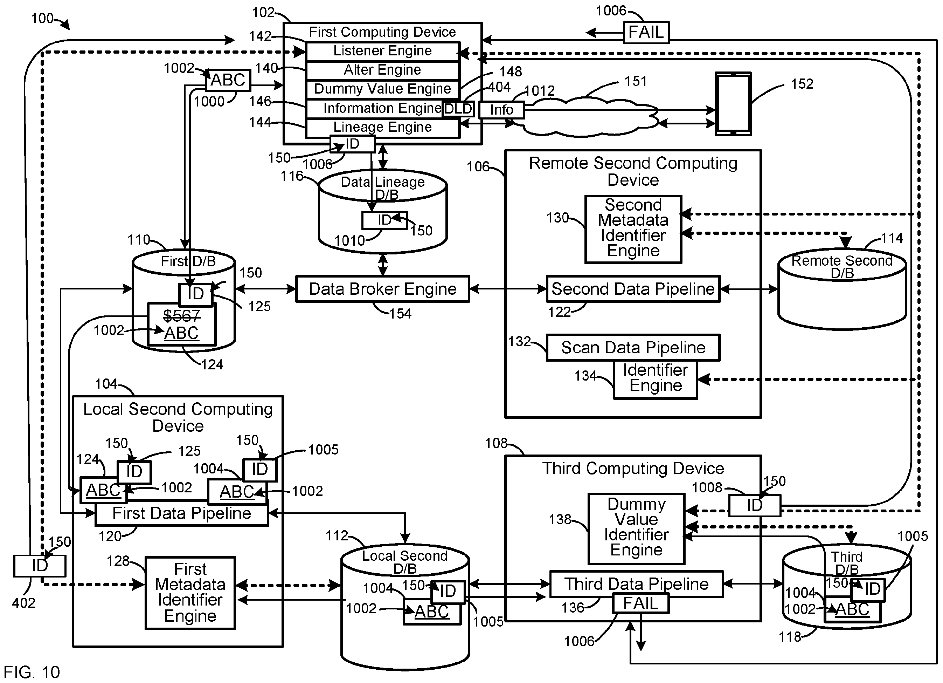

In these examples, the local second computing device 104 may generate such altered data to place the given data 124 into a format suitable for processing by the third data pipeline 136 of the third computing device 108. Hence, a subscription to data that includes the given data 124, by the third computing device 108, may include first processing the given data 124 at the local second computing device 104. Hence, while reference is made hereafter to the third computing device 108 processing the given data 124, it is understood that the given data 124 may be in a form of altered data. Such an example is further described with respect to FIG. 10, FIG. 11 and FIG. 12.

At a block 906, the third computing device 108 implements a respective data pipeline 136 (e.g., the third data pipeline 136) that processes the given data 124.

At a block 908, the third computing device 108 determines a failure of the respective data pipeline 136 to process the given data 124 due to the dummy value being incompatible with the given data format.

For example, the third data pipeline 136 may be to process the given data 124 into yet another format, and the third data pipeline 136 may rely on numeric values in a "price" field being present, otherwise such processing will fail. Hence, at the block 908, the respective data pipeline 136 fails when such a price field includes a letter and/or a special character of a dummy value.

At a block 910, the third computing device 108 provides a failure indication to the first computing device 102. For example, the third computing device 108 may detect the failure of the third data pipeline 136 and provide a failure indication to the first computing device 102.

At a block 912, which may be optional (and hence is depicted in dashed lines), the third computing device 108 stores the given data 124 that includes the dummy value at the third database 118, for example in response to the failure of the respective data pipeline 136.

At a block 914, the third computing device 108 implements the dummy value identifier engine 138 in communication with the first computing device 102. The block 916 and the block 918 are understood to be implemented via the dummy value identifier engine 138.

At a block 916, the third computing device 108, via the dummy value identifier engine 138, processes the given data 124 that includes the dummy value (e.g., at the third database 118) to identify the dummy value. For example, the dummy value may be the same for any data for which replacements are made at the block 902 and hence the dummy value identifier engine 138 may be configured to search for such a dummy value in data stored at the third database 118. Alternatively, or in addition, the dummy value may have a format that is the same for each dummy value, and the dummy value identifier engine 138 may search for values having such a format in fields of data stored at the third database 118. However, the dummy value identifier engine 138 may process data of the third database 118 in any suitable manner to identify the dummy value.

While present example are described with respect to the third computing device 108, via the dummy value identifier engine 138, processing the given data 124 that includes the dummy value by processing the given data 124 that includes the dummy value as stored at the third database 118, it is understood that the third computing device 108 may process the given data 124 that includes the dummy value in any suitable manner. For example, as the third computing device 108 has access to the given data 124 that includes the dummy value prior to storing the given data 124 that includes the dummy value at the third database 118, the third computing device 108 may pass the given data 124 that includes the dummy value to the dummy value identifier engine 138 without storing the given data 124 that includes the dummy value. Alternatively, and/or in addition, the third computing device 108 may detect the given data 124 that includes the dummy value at the third data pipeline 136. Indeed, the third computing device 108 may be configured to not store given data that includes the dummy value at the third database 138, and hence may pass received given data to the dummy value identifier engine 138 to first determine whether the given data includes the dummy value, and the given data may be stored at the third database 118 only when the given data does not include the dummy value.

At a block 918, the third computing device 108, via the dummy value identifier engine 138, provides a respective indication of usage of the given data 124 to the first computing device 102. The respective indication identifies the given data 124. For example, the respective indication may include the given identifier 150.

At a block 920, the first computing device 102 stores the respective indication, or respective data thereof, at the data lineage database 116 in data lineage data, for example of the data lineage database 116.

At a block 922, the first computing device 102 processes the respective indication, or respective data thereof, as stored at the data lineage database 116 to determine respective usage of the given data by the third computing device 108. The block 922 is generally similar to the block 318 of the method 300.

At a block 924, the first computing device 102 provides respective information indicative of the respective usage of the given data 124 by the third computing device 108 over the computer network 151 such that the users of the computer network 151 (e.g., represented by the communication device 152) have immediate access to up-to-date data lineage data of the given data 124 that includes the respective information. The block 924 is generally similar to the 320 of the method 300.

At a block 926, the first computing device 102 updates the first database 110 based on the up-to-date data lineage data. For example, the up-to-date data lineage data may indicate that the given data 124 is no longer in use and/or other data available to the system 100 may indicate that the third computing device 108 may no longer meet certain regulatory standards that may govern the given data 124. In this instance, when the up-to-date data lineage data indicates that the given data 124 is being used by third computing device 108, the first database 110 may be updated to indicate that the given data 124 is no longer to be supplied to the third computing device 108, and the like, though the given data 124 may be provided to other computing devices, such as the remote second computing device 106. The block 926 is generally similar to the 322 of the method 300.

At a block 928, the first computing device 102 receives the failure indication from the third computing device 108. The block 928 may be implemented in conjunction with the block 910.

At a block 930, the first computing device 102 repairs the given data 124 at the first database 110 to replace the dummy value at the field with the initial value. For example, at the block 930, the first computing device 102 reverses the action of the block 902. The repair of the block 930 may occur in response to receiving the failure indication at the block 928. It is understood that the given data 124 is again provided to the third computing device 108.

At a block 932, the third computing device 108 again implements the respective data pipeline 136 to process the given data 124 as repaired.

The method 900 is next described with respect to FIG. 10, FIG. 11 and FIG. 12 which are substantially similar to FIG. 1, with like components having like numbers.

FIG. 10 depicts the first computing device 102 altering (e.g., at the block 902) the metadata 125 of the given data 124 to replace an initial value of a field of the given data 124 at the first database 110 with a dummy value that is incompatible with a given data format associated with the field. For example, the first computing device 102 provides a command 1000 that includes a dummy value 1002 of the letters "ABC" to the first database 110, the command 100 to replace a price of "$567" in a given field with the dummy value 1002 of "ABC" at a field. It is further understood that the given data 124 has been altered to include the given identifier 150 at the metadata 125.

The local second computing device 104 receives the given data 124 that includes the given dummy value 1002 (e.g., due to a subscription, and the like to data that includes the given data 124), and implements the first data pipeline 120 that processes the given data 124 to generate altered given data 1004 that includes the dummy value 1002, and the given identifier 150 in respective metadata 1005. The local second computing device 104 stores the altered given data 1004 at the local second database 112, and the altered given data 1004 is received (e.g., at the block 904) at the third computing device 108, for example upon retrieval of the altered given data 1004 from the local second database 112. The process provided by the local second computing device 104 may be omitted when the given data 124 is already in a format of the altered given data 1004.

The third computing device 108 implements (e.g., at the block 906) the third data pipeline 136 to process and/or scan the altered given data 1004 (e.g., the given data 124 in a form of the altered given data 1004).

The third computing device 108 determines (e.g., at the block 908) a failure of the third data pipeline 136 to process the altered given data 1004 due to the dummy value 1002 being incompatible with a given data format (e.g., the dummy value 1002 is letters and not numbers). For example a failure indication 1006 may be generated and provided (e.g., at the block 910) to the first computing device 102. While not depicted, the failure indication 1006 may include the given identifier 150 to identify the given data 124. The failure indication 1006 is received (e.g., at the block 928) at the first computing device 102.

The third computing device 108 (optionally) stores (e.g., at the block 912) the altered given data 1004 that includes the dummy value 1002 at the third database 118.

The third computing device 108 implements (e.g., at the block 914) the dummy value identifier engine 138 to process (e.g., at the block 916) the altered given data 1004 to identify the dummy value 1002, generate and provide (e.g., at the block 918) an indication 1008 of usage of the given data 124 and/or the altered given data 1004 to the first computing device 102, the indication 402 including the given identifier 150.

The first computing device 102 receives (e.g., via the listener engine 142) and stores (e.g., via the lineage engine 144, at the block 920) the indication 1008, or data thereof, at the data lineage database 116, for example as data lineage data 1010, the data lineage data 1010 including the given identifier 150, and any suitable identifiers (not depicted) associated with the third computing device 108 and/or the third data pipeline 136 indicating where and/or how the given data 124 was used.

Furthermore the first computing device 102 processes (e.g., at the block 922) the data lineage data 1010 to determine usage of the given data 124 by the third computing device 108, and provides (e.g., at the block 924) to the at least one communication device 152, over the computer network 151, information 1012 indicative of the usage of the given data 124 by the third computing device 108, such that users of the computer network 151 (e.g., as represented by the communication device 152) have immediate access to up-to-date data lineage data 1010 associated with the given data 124. For example, the information 1012 may include at least a portion of the data lineage data 1010 that indicates usage of the given data 124 by the third computing device 108. The data lineage data 1010 is understood to represent up-to-date data lineage data and hence the data lineage data 1010 is interchangeably referred to hereafter as the up-to-date data lineage data 1010.

The information 1012 may be processed by, and/or reviewed at, the communication device 152 using any suitable application.

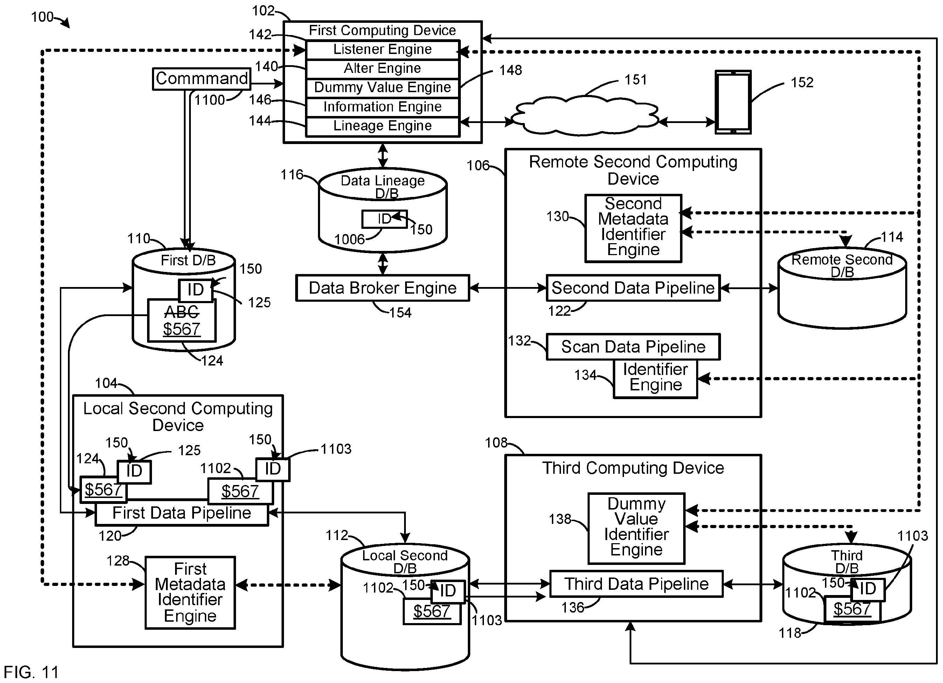

Attention is next directed to FIG. 11, which is understood to follow in time from FIG. 10 and/or the example of FIG. 11 may be performed in conjunction with the example of FIG. 10. In FIG. 11, the first computing device 102, having received the failure indication 1006 (e.g., at the block 928), provides a command 1100 the first database 110 to repair the given data 124 at the first database 110 by replacing the dummy value 1002 at the field with the initial value. Hence, as depicted, the letters "ABC" are replaced with the price of "$567". It is hence understood that the price of "$567" may be at least temporarily stored, at the first database 110 and/or at a memory 204 of the first computing device 102. The command 1100 may be to retrieve the initial value of the field of the given data 124 (e.g., the price of "$567") from the first database 110 to perform the replacement, or the command 1100 may include the initial value of the field of the given data 124 (e.g., the price of "$567") to perform the replacement. Regardless, the command 1100 may repair (e.g., at the block 930) the given data 124 at the first database 110 by replacing the dummy value 1002 at the field with the initial value.

The given data 124, as repaired, is again provided to the local second computing device 104, which generates altered given data 1102 therefrom using the first data pipeline 120, altered given data 1102 including the given identifier 150 at respective metadata 1103. The altered given data 1102 may be similar to the altered given data 1004, other than the initial value of "$567" replacing the dummy value 1002. The altered given data 1102 is stored at the local second database 112, and retrieved by the third computing device 108, which again implements the third data pipeline 136 to process the altered given data 1102 (e.g., the given data 124 as repaired, in the form of the altered given data 1004, for example at the block 932). The altered given data 1102 may replace the previous altered given data 1102 at the third database 118; or, when the previous altered given data 1102 is not stored at the third database 118, the altered given data 1102 is stored at the third database 118.

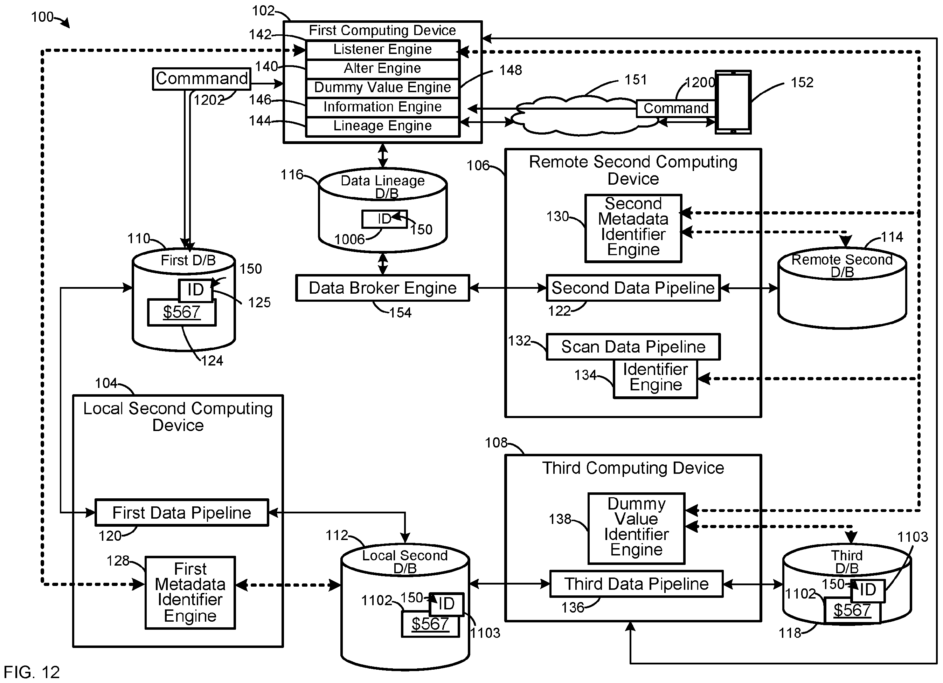

Attention is next directed to FIG. 12, which is understood to follow in time from FIG. 11, and/or the example of FIG. 12 may be performed in conjunction with the example of FIG. 11. In FIG. 12, the communication device 152, having received the information 1012, provides a command 1200 to the first computing device 102 to alter and/or update the first database 110 based on the up-to-date data lineage data 1010 (e.g., at the block 926), for example as represented by the information 1012. The command 1200 may be to update permissions of the given data 124, change subscriptions to the given data 124, delete the given data 124, and/or to perform any other suitable technical action associated with the given data 124 which may alter access to the given data 124 at the first database 110, including, but not limited to, changing a subscription to data, that presently includes the given data 124, to exclude the given data 124. For example, a subscription to such data by the third computing device 108 may be altered and/or changed and/or cancelled. For example, the first computing device 102 receives the command 1200 and may generate a similar command 1202, but in a database command format, and provide the command 1202 to the first database 110 to implement instructions of the command 1202.

It is understood that any of the examples herein may occur in any suitable conjunction with each other such that updates to the first database 110 may occur based on any suitable combination of up-to-date data lineage data 404, 608, 802, 1010.

The given data 124 may comprise any suitable data. For example, in the context of the travel industry, the given data 124 may comprise a passenger name record (PNR) and/or provider objects which may include personal information provided by a passenger and/or a travel agency, and which may be processed by any of the computing devices 104, 106, 108, which may be operated by one or more reservation sites, one or more provider systems and/or airlines, one or more intermediation servers (e.g., intermediating between client devices operated by passengers, travel agents, and the like, and provider systems and/or airlines), and the like. Indeed, while not depicted one or more of the computing devices 104, 106, 108 may be operated by one or more provider systems, operated by airlines, and/or any other entity which may provide provider objects and the like. Provider objects, in the examples discussed herein, may comprise data records, and the like, which correspond to products and/or items and/or events, such as travel-related goods and services (e.g., flights, hotel reservations, car rentals and the like), provided by a provider system. More specifically, provider objects may define flight tickets, car rentals, hotel rentals, and related services (e.g., limo pickup services, excursions at a destination, baggage check services, in-flight food, entertainment, pet-related services, and the like). However, it is understood that the systems and methods discussed herein can also be applied to various other types of data objects and/or items including, but not limited to, data objects that correspond to any suitable products and/or any suitable items available (e.g., for purchase, and the like) from any suitable website, and the like. Furthermore, it is understood that PNRs and/or provider objects and/or travel industry examples are not to be considered unduly limiting, and any suitable type of the given data 124 is within the scope of the present specification. For example, the given data 124 may include, but is not limited to, a medical record, a human resource record, an employment record, an employee record, and the like.

As should by now be apparent, the operations and functions of the devices described herein are sufficiently complex as to require their implementation on a computer system, and cannot be performed, as a practical matter, in the human mind. In particular, computing devices, and the like, such as set forth herein are understood as requiring and providing speed and accuracy and complexity management that are not obtainable by human mental steps, in addition to the inherently digital nature of such operations (e.g., a human mind cannot synchronize databases, interface directly with, RAM or other digital storage, cannot transmit or receive electronic messages, among other features and functions set forth herein).

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, XZ, and the like). Similar logic can be applied for two or more items in any occurrence of "at least one..." and "one or more..." language.

Unless the context of usage unambiguously indicates otherwise, articles "a," "an," and "the" should not be interpreted as meaning "one" or "only one." Rather such articles should be interpreted as meaning "at least one" or "one or more." Similarly, when the terms "the" or "said" are used to refer to a noun previously introduced by the indefinite article "a" or "an," "the" and "said" mean "at least one" or "one or more" unless the usage unambiguously indicates otherwise.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Persons skilled in the art will appreciate that in some examples, the functionality of devices and/or methods and/or processes described herein can be implemented using preprogrammed hardware or firmware elements (e.g., application specific integrated circuits (ASICs), electrically erasable programmable read-only memories (EEPROMs), etc.), or other related components. In other examples, the functionality of the devices and/or methods and/or processes described herein can be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program can be stored as a computer program product comprising a computer usable medium. Further, a persistent storage device can comprise the computer readable program code. It is yet further appreciated that the computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A system (100) comprising:
a first database (110) storing given data (124);
a data lineage database (116) storing data lineage data;
a first computing device (102) configured to:
alter metadata of the given data (124) to include a given identifier (150);
a second computing device (104, 106) configured to:
receive the given data (124) that includes the given identifier (150) in the metadata;
implement a data pipeline (120, 122) that processes the given data (124) to generate altered given data (124) that includes the given identifier (150) in respective metadata; and
implement a metadata identifier engine (128, 130) configured to:
process the altered given data (124) to identify the given identifier (150) in the respective metadata; and
provide an indication of usage of the given data (124) to the first computing device (102), the indication including the given identifier (150);
wherein the first computing device (102) is further configured to:
store the indication, or data thereof, at the data lineage database (116) in the data lineage data;
process the data lineage data, as stored at the data lineage database (116) to determine usage of the given data (124) by the second computing device (104, 106); and
provide information indicative of the usage of the given data (124) by the second computing device (104, 106) over a computer network (151) such that users (152) of the computer network (151) have immediate access to up-to-date data lineage data associated with the given data (124).

2. The system (100) of claim 1, wherein the second computing device (104, 106) is further configured to:
implement a scan data pipeline (120, 122) that performs a scan of one or more of the given data (124) and the altered given data (124); and
implement an identifier engine configured to:
identify one or more of the given data (124) and the altered given data (124) in the scan data pipeline (120, 122) using the given identifier (150); and
provide an alert of the scan associated with the given data (124) to the first computing device (102), the alert including the given identifier (150);
wherein the first computing device (102) is further configured to:
store the alert, or respective data thereof, at the data lineage database (116) in the data lineage data;
process the alert, or the respective data thereof, as stored at the data lineage database (116) to determine that the scan occurred, in association with the given data (124), by the second computing device (104, 106); and
provide respective information indicative of the scan associated with the given data (124), as implemented by the second computing device (104, 106), over the computer network (151) such that the users (152) of the computer network (151) have immediate access to the up-to-date data lineage data of the given data (124) that includes the respective information.

3. The system (100) of claim 2, wherein the first computing device (102) is further configured to store the alert, or the respective data thereof, at the data lineage database (116) in the data lineage data only when other data that includes the respective data provided by the alert is not already stored at the data lineage database (116).

4. The system (100) of any one of claim 1 to claim 3, further comprising:
a third computing device (108) incompatible with processing the metadata or the respective metadata,
wherein the first computing device (102) is further configured to:
replace an initial value of a field of the given data (124) at the first database (110) with a dummy value that is incompatible with a given data (124) format associated with the field;
wherein the third computing device (108) is configured to:
receive the given data (124) that includes the dummy value;
implement a respective data pipeline (120, 122) that processes the given data (124);
determine a failure of the respective data pipeline (120, 122) to process the given data (124) due to the dummy value being incompatible with the given data (124) format; and
implement a dummy value identifier engine configured to:
process the given data (124) that includes the dummy value to identify the dummy value;
provide a respective indication of usage of the given data (124) to the first computing device (102), the respective indication including the given identifier (150);
wherein the first computing device (102) is further configured to:
store the respective indication, or respective data thereof, at the data lineage database (116) in the data lineage data;
process the respective indication, or the respective data thereof, as stored at the data lineage database (116) to determine respective usage of the given data (124) by the third computing device (108); and
provide respective information indicative of the respective usage of the given data (124) by the third computing device (108) over the computer network (151) such that the users (152) of the computer network (151) have immediate access to the up-to-date data lineage data of the given data (124) that includes the respective information.

5. The system (100) of claim 4, wherein the third computing device (108) is further configured to:
provide a failure indication to the first computing device (102);
wherein the first computing device (102) is further configured to:
receive the failure indication from the third computing device (108); and
repair the given data (124) at the first database (110) to replace the dummy value at the field with the initial value, and
wherein the third computing device (108) is yet further configured to:
again implement the respective data pipeline (120, 122) to process the given data (124) as repaired.

6. The system (100) of claim 4, wherein the given data (124) as received at the third computing device (108) is in a form of the altered given data (124) and is received from the second computing device (104, 106) as output from the data pipeline (120, 122).

7. The system (100) of any one of claim 1 to claim 6, wherein the data pipeline (120) is a component of a local data environment that is local to the first database (110).

8. The system (100) of any one of claim 1 to claim 7, wherein the data pipeline (122) is a component of a remote data environment that is remote from the first database (110).

9. The system (100) of any one of claim 1 to claim 8, wherein the information indicative of the usage of the given data (124) by the second computing device (104, 106) identifies one or more of
the given data (124);
the second computing device (104, 106);
a user associated with the second computing device (104, 106);
an entity associated with the second computing device (104, 106); and
a process implemented by the data pipeline (120, 122).

10. A method comprising:
altering, via a first computing device (102), metadata of given data (124) to include a given identifier (150), the given data (124) stored at a first database (110);
receiving, via a second computing device (104, 106), the given data (124) that includes the given identifier (150) in the metadata;
implementing, via the second computing device (104, 106), a data pipeline (120, 122) that processes the given data (124) to generate altered given data (124) that includes the given identifier (150) in respective metadata;
implementing, via the second computing device (104, 106), a metadata identifier engine (128, 130);
processing, via the metadata identifier engine (128, 130), the altered given data (124) to identify the given identifier (150) in the respective metadata;
providing, via the metadata identifier engine (128, 130), an indication of usage of the given data (124) to the first computing device (102), the indication including the given identifier (150);
storing, via the first computing device (102), the indication, or data thereof, at a data lineage database (116) in data lineage data;
processing, via the first computing device (102), the data lineage data, as stored at the data lineage database (116) to determine usage of the given data (124) by the second computing device (104, 106); and
providing, via the first computing device (102), information indicative of the usage of the given data (124) by the second computing device (104, 106) over a computer network (151) such that users (152) of the computer network (151) have immediate access to up-to-date data lineage data associated with the given data (124).

11. The method of claim 10, further comprising:
implementing, via the second computing device (104, 106), a scan data pipeline (120, 122) that performs a scan of one or more of the given data (124) and the altered given data (124);
implementing, via the second computing device (104, 106), an identifier engine;
identifying, via the identifier engine, one or more of the given data (124) and the altered given data (124) in the scan data pipeline (120, 122) using the given identifier (150);
providing, via the identifier engine, an alert of the scan associated with the given data (124) to the first computing device (102), the alert including the given identifier (150);
storing, via the first computing device (102), the alert, or respective data thereof, at the data lineage database (116) in the data lineage data;
processing, via the first computing device (102), the alert, or the respective data thereof, as stored at the data lineage database (116) to determine that the scan occurred, in association with the given data (124), by the second computing device (104, 106); and
providing, via the first computing device (102), respective information indicative of the scan associated with the given data (124), as implemented by the second computing device (104, 106), over the computer network (151) such that the users (152) of the computer network (151) have immediate access to the up-to-date data lineage data of the given data (124) that includes the respective information.

12. The method of claim 11, further comprising: storing, via the first computing device (102), the alert, or the respective data thereof, at the data lineage database (116) in the data lineage data only when other data that includes the respective data provided by the alert is not already stored at the data lineage database (116).

13. The method of any one of claim 10 to claim 12, further comprising:
replacing, via the first computing device (102), an initial value of a field of the given data (124) at the first database (110) with a dummy value that is incompatible with a given data (124) format associated with the field;
receiving, via a third computing device (108), the given data (124) that includes the dummy value, the third computing device (108) incompatible with processing the metadata or the respective metadata;
implementing, via the third computing device (108), a respective data pipeline (120, 122) that processes the given data (124);
determining, via the third computing device (108), a failure of the respective data pipeline (120, 122) to process the given data (124) due to the dummy value being incompatible with the given data (124) format;
implementing, , via the third computing device (108), a dummy value identifier engine;
processing, via the dummy value identifier engine, the given data (124) that includes the dummy value to identify the dummy value;
providing via the dummy value identifier engine, a respective indication of usage of the given data (124) to the first computing device (102), the respective indication including the given identifier (150);
storing, via the first computing device (102), the respective indication, or respective data thereof, at the data lineage database (116) in the data lineage data;
processing, via the first computing device (102), the respective indication, or the respective data thereof, as stored at the data lineage database (116) to determine respective usage of the given data (124) by the third computing device (108); and
providing, via the first computing device (102), respective information indicative of the respective usage of the given data (124) by the third computing device (108) over the computer network (151) such that the users (152) of the computer network (151) have immediate access to the up-to-date data lineage data of the given data (124) that includes the respective information.

14. The method of claim 13, further comprising:
providing, via the third computing device (108), a failure indication to the first computing device (102);
receiving, via the first computing device (102), the failure indication from the third computing device (108); and
repairing, via the first computing device (102), the given data (124) at the first database (110) to replace the dummy value at the field with the initial value, and
again implementing, via the third computing device (108), the respective data pipeline (120, 122) to process the given data (124) as repaired.

15. The method of any one of claim 10 to claim 14, wherein the information indicative of the usage of the given data (124) by the second computing device (104, 106) identifies one or more of
the given data (124);
the second computing device (104, 106);
a user associated with the second computing device (104, 106);
an entity associated with the second computing device (104, 106); and
a process implemented by the data pipeline (120, 122).
